(19) **Europäisches Patentamt**

**European Patent Office**

**Office européen des brevets**

(11) **EP 1 524 796 A2**

(12) **EUROPEAN PATENT APPLICATION**

(43) Date of publication:
**20.04.2005 Bulletin 2005/16**

(51) Int Cl.⁷: **H04L 12/24**

(21) Application number: **04105036.0**

(22) Date of filing: **14.10.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **14.10.2003 FI 20031498**

(71) Applicant: **Medicel Oy
00290 Helsinki (FI)**

(72) Inventors:
• **Varpela, Pertteli
02730 Espoo (FI)**
• **Kolmer, Meelis
02660 Espoo (FI)**

(74) Representative: **Virkkala, Jukka Antero
Kolster Oy Ab,
Iso Roobertinkatu 23,
P.O. Box 148
00121 Helsinki (FI)**

(54) **Visualization of large information networks**

(57) A system for visualizing an information network. A database (DB) contains node descriptions and connection descriptions that collectively define the topology of the information network. A rule set (RS) relates at least to the topology of the information network. First user input means (IN) receive a navigation input (NI) and a definition a set of focus nodes. Second user input means receive filter settings (FS). Selection means (RE, FR) dynamically create one or more subnetworks based on the set of focus nodes, the topology of the information network, the rule set (RS) and the filter settings (FS). Layout generation means (LG, BF, ZP) dynamically generate a layout for the subnetworks.

Fig. 2

EP 1 524 796 A2

**Description**

BACKGROUND OF THE INVENTION

The invention relates to methods, systems and computer program products for visualizing an information network. The information network comprises nodes and connections between the nodes. The information network may be a computer-rendered presentation of a physical network, such as a data/telecommunication network or an electrical network, or the information network may be a systematic arrangement of inter-related information items. For example, biochemical information or an extensive software project can be arranged as an information network. As used herein, a large network means a network that cannot be visualized on a single computer display. For example, in biochemical research it is not uncommon to have information networks having over one million elements (nodes and/or connections).

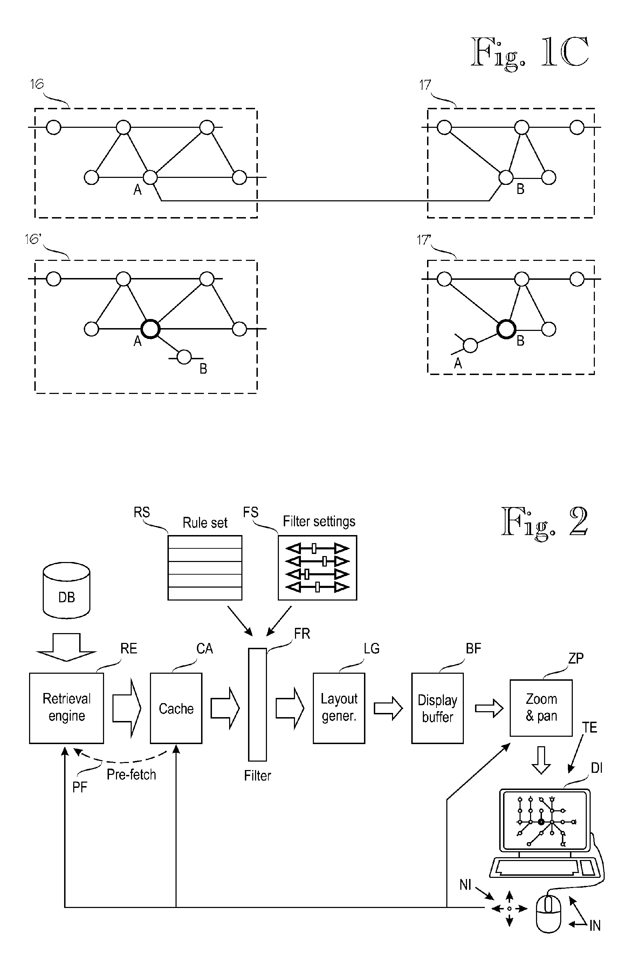

Figure 1A shows an exemplary fragment of an information network. Figure 1A was published in reference 1 (see the end of this specification). The information network shown in Figure 1A illustrates relations between information items that relate to the anthrax attacks in the USA in autumn 2001.

One of the problems with large information network can be demonstrated by the following mental exercise: take the node "attack" in Figure 1A. The displayed neighbours of this node are "plane", "suicide", "anthrax", "sept", "biological", "month", "world_trade_ctr" and "united_states", but does the node "attack" have more neighbour nodes that are not shown in Figure 1A? It takes some time to realize that there is yet another connection leading through "washington" to a non-displayed neighbour node. Thus one of the problems in prior art information networks is the failure to properly answer the question: "does the picture of a network node show the complete picture or is some essential information omitted?" A related problem is illustrated by the following question: "does the line from node 'white_house' through the word 'washington' actually pass through the node 'washington'?" Answer: it does not, although one is easily mislead into thinking it does because the White House is located in Washington. A related problem is that when the user performs a panning operation to follow a line leading out of the picture, (s)he may lose sight of interesting nodes that are no longer displayed.

Visualization of large information networks is thus hampered by several problems. A first problem is related to the fact that a user may be interested in connections between nodes that are very far from each other. Zooming out to a very small scale lets the user see all nodes of interest but the small zoom scale results in a hopelessly cluttered display. If the network is large compared with the resolution of the display device being used, it is impossible to see the connections between distant nodes.

Yet another problem is caused by the fact that some information networks comprise nodes and/or connections that relate to an unmanageable number of other nodes and/or connections. For example, in biochemical information networks, water and ribosome are nodes having connections to virtually every other node. While such relations are important, it is difficult to display nodes with thousands of connections.

All of the above-mentioned problems can be seen as aspects of one bigger problem: how to visualize large information networks?

BRIEF DESCRIPTION OF THE INVENTION

It is an object of the invention to provide a mechanism for visualizing large information networks such that the above problems are solved. The object of the invention is achieved by a system, a method and a computer program product which are characterized by what is stated in the independent claims. The preferred embodiments of the invention are disclosed in the dependent claims.

All aspects and embodiments of the invention enhance manipulating large information networks. Some enhancements relate to the construction and maintenance of truly large networks. Many of the embodiments are particularly suitable to biochemical networks. For instance, some embodiments relate to data storage techniques for storing virtually any kind of biochemical information. With today's vast disk arrays, the amount of biochemical information per se is not a problem, but ambiguity is. If multiple users are permitted to store information without any formal restrictions, the users will certainly store similar information under different names. On the other hand, if all information is rigidly structured, it may be impossible to store new kind of information. For example, in the past it was self-evident that a certain gene of a certain animal is located in that animal. This is no longer true, and an information management system must cope with such information-handling problems. This exemplary problem is solved by an extendible but structured variable description language that comprises separate descriptors for organism and location, whereby it is possible to indicate one organism's gene in another organism without ambiguity.

Other enhancements relate to selecting manageable subnetworks for manipulation by a single user or team of users. Biochemical information networks may comprise millions of nodes and inter-node connection. A single computer display cannot display more a few hundred nodes at a time, which means that much less than one thousandth of the entire information network is displayed at any time. This results in navigation problems which are solved by multi-step navigation. Navigation is typically begun with database queries that create a cross approximation of a subnetwork desired by the user. Navigation is then continued by more selective techniques that may be based on mouse or keyboard input.

The problem of displaying two or more distant node groups is solved by dynamically regenerating the visual layout of the network based on the network topology as needed. This means that the nodes and connections of the network do not have an inherent or rigid layout.

The problem of some nodes having an unmanageable number of connections to other nodes is solved by user-settable filters and filtering rules. For example, the user may filter out nodes having more than a number n connections.

The problem of finding out if a displayed not has non-displayed neighbours is solved by displaying an explicit indicator next to nodes with non-displayed neighbours.

The visual layout of the network may be regenerated when the user navigates to a new element or location in the network or changes one or more of the filter settings. An advantage of this feature of the invention that a reasonably-sized display device can display selected portions of very large and/or complex networks such that the selected portion is not a zoom-in window but a subset of the network elements that are topologically close the user's focus of interest. The term 'topologically close' is interpreted in an elegant manner, for example as: "display nodes that are reachable from node X by no more than n consecutive connections; suppress connections via nodes that have over p connections". The user-settable suppression feature is important in some applications. For example, in biochemical information networks water and ribosome relate to virtually all other nodes, which means that virtually any two arbitrary nodes are reachable from each other via ribosome or water. In a large synchronous digital circuit, such filtering would temporarily inhibit displaying of power and system clock lines because any two components are connected to each other via power lines or system clock.

BRIEF DESCRIPTION OF THE DRAWINGS

In the following the invention will be described in greater detail by means of preferred embodiments with reference to the attached drawings, in which

Figure 1A shows elements of a large information network and illustrates some of the associated problems;
Figure 1B illustrates some network-related terms and notations;
Figure 1C illustrates dynamic displaying of subnetworks;
Figure 2 shows a preferred information management system ("IMS") for storing biochemical information;
Figure 3 shows a node and a connection as stored in a database;
Figure 4 is a signalling diagram that illustrates the operation of the system as shown in Figure 2;
Figure 5 shows some elements and implementation details of a preferred user interface;
Figure 6 is an entity-relationship model of a database structure of the IMS;
Figure 7A is a block diagram of a pathway as stored in the IMS;
Figure 7B shows an example of complex pathway that contains simpler pathways;
Figure 7C shows an example of pathway that relates to analogue and Boolean flux rate equations;
Figure 8 shows a visualized form of a pathway;
Figures 9A and 9B illustrate a preferred variable description language;
Figure 10 illustrates a process for automatic syntax checking;
Figure 11 shows examples of compound variable expressions in the variable description language;
Figure 12 shows an example of an object-based implementation of the biomaterials section of the IMS;
Figures 13A to 13C illustrate data sets according to various preferred embodiments of the invention;
Figure 14 shows how a data matrix can serve as a basis for the user's navigation input;
Figure 15 shows an embodiment in which a node is provided with a numerical parameter indicator;
Figures 16A to 16E illustrate a process for finding networks containing a user-specified pattern, such as a loop;
Figure 17 illustrates visualization of differences between two different subnetworks;
Figures 18A to 18D illustrate advantageous embodiments for navigation and layout techniques; and
Figure 19 shows a preferred state diagram for navigation by arrow keys.

DETAILED DESCRIPTION OF THE INVENTION

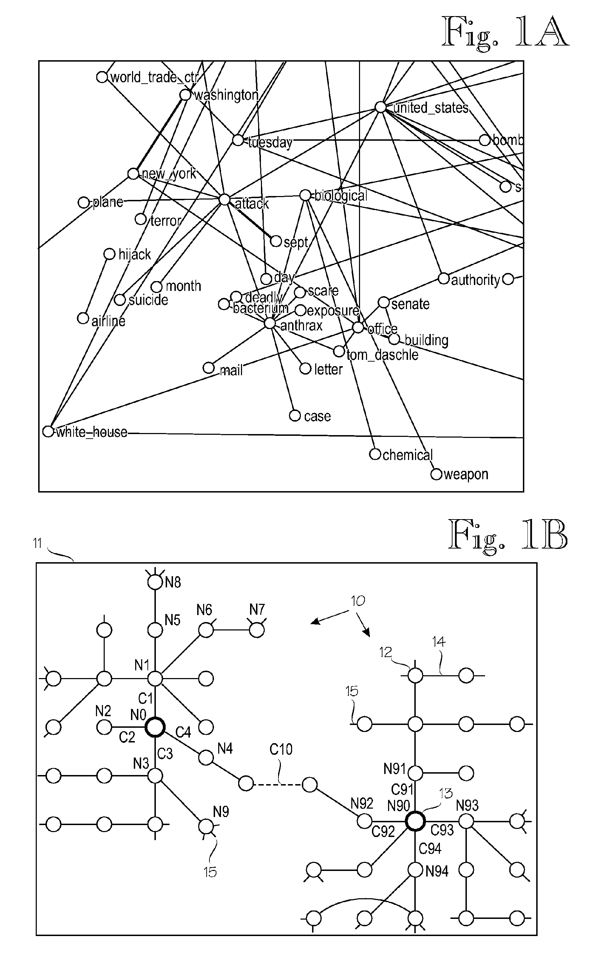

Figure 1B illustrates some network-related terms and notations. A network 10 is displayed in a display window 11 whose limits may or may not coincide with the physical limits of a display device. The network 10 has a topology which is defined by the interrelation of the nodes and connections. Reference numeral 12 denotes an exemplary node, displayed in this example as a circle. Reference numeral 13 denotes a focus node, displayed in this example as a circle with a thick outline. Focus nodes are nodes selected by a user. The selection means for selecting focus nodes will be described later. For the purposes of Figure 1B, it suffices to say that focus nodes can be selected individually (eg by pointing and clicking at a node's icon) or collectively by database queries. Reference numeral 14 denotes an inter-node connection. In some documents such connections are called "arcs", but the term "connection" emphasizes the fact that in most real-life applications the connections have individual physical characteristics apart from the network topology. Elements 10 to 14 are well known in the art.

A particularly useful application of the invention is visualization of large biochemical networks. As used herein, a biochemical network is a network whose nodes and connections describe biological entities, with or without extensions to chemistry. In biochemical networks the nodes can represent genes and proteins, and the connections can represent the relations (interactions) between the nodes. For instance, if a gene encodes a protein, the gene and protein can be represented by nodes, and the encoding of the protein by that gene is represented by a connection of a certain type. Further proteins that activate or inhibit such encoding can be represented by further nodes and the activation or inhibition by further connection types. This is but one example, however, and large information networks can be used with planning and maintenance of telecommunication or electrical networks, electronic circuit diagrams, transportation, business organizations, or the like.

According to the invention, one or more explicit indicators 15 are displayed at or near each node that has one or more non-displayed neighbours. As shown in Figure 1B, nodes N6, N7 and N8 have, respectively, one, two and three non-displayed neighbour indicators. This could mean, for example, that N6, N7 and N8 have, respectively, one, two and three non-displayed neighbours. But in a simpler implementation, a non-displayed neighbour indicator may indicate any number of non-displayed neighbours. In a more elegant implementation, the number of non-displayed neighbour indicators may reflect the number of non-displayed neighbours only up to a certain number, such as three, four or five.

Unlike the lines leading out of the display in Figure 1A, the explicit non-displayed neighbour indicators 15 according to the invention are easily detectable as such, because the indicators 15 are substantially of similar size and shape (although their orientation may differ) and the entire indicator is displayed next to the node to which it relates. This difference is well evidenced by a comparison between node "white_house" in Figure 1A and node N9 in Figure 1B. Both nodes have the same number of displayed and non-displayed neighbours (one and three, respectively), but it takes considerable effort and care to determine the number of non-displayed neighbours of node "white_house", while the number of non-displayed neighbours of node N9 is immediately visible. At best, the lines in Figure 1A leading out of the picture can be called implicit indicators of non-displayed neighbours. As used herein, an implicit non-displayed neighbour indicator means a line segment extending to the borders of a display area or a cut-out template.

In Figure 1B, the explicit non-displayed neighbour indicators 15 are line segments of substantially constant size, but other implementations are possible. For example, some specific outlines (such as dashed lines) or colours can be used to indicate icons of nodes with non-displayed neighbours.

If the information network is large compared to the system resources, it may take a long amount of time to determine with certainty if a node actually has non-displayed neighbours. Accordingly, it is beneficial to display a non-displayed neighbour indicator next to each node that may have non-displayed neighbour(s). These are nodes that lie at the topological edge of each displayed subnetwork. In a particularly advantageous embodiment the system uses a different indicator, such as a light (or small or dashed) one for edge nodes that may have non-displayed neighbour(s) but the system has not yet been able to check if they do. This indicator will then be removed or changed to a dark (or large or solid) indicator when the system has had sufficient time to check which nodes actually have non-displayed neighbours.

It is generally not harmful to display a non-displayed neighbour indicator next to a node that has no non-displayed neighbours. But when no indicator is displayed, the user should be able to rely on the neighbourhood information being complete.

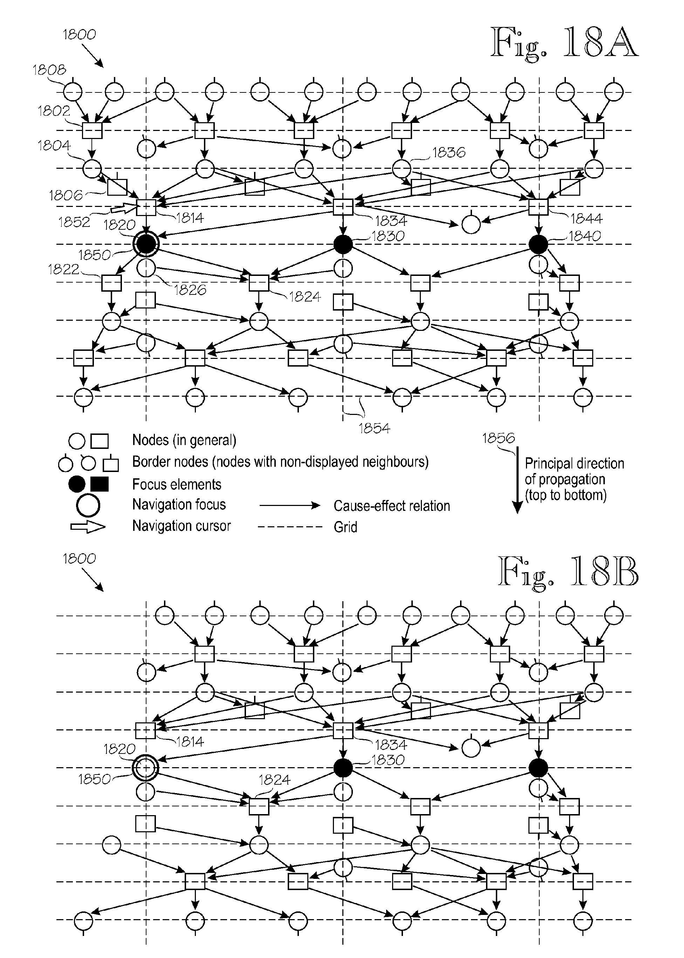

Figure 1B shows another preferred feature of the invention, namely the ability to display multiple subnetworks, ie, groups of nodes and connections such that each group consists of neighbours and neighbours-of-neighbours of a focus node up to a predetermined depth even if the distance between the focus nodes exceeds that depth. Figure 1B shows two such groups. One group is around node N0 and the other is around node N90. Nodes N0 and N90, shown here with a bold outline, can be called focus nodes. They are nodes that the user selects by some selection means, such as a database query or mouse click operation. Focus nodes will be further described in connection with Figures 18A to 19. Connection C10 connects the two node groups. Part of connection C10 is shown with a dashed line to illustrate the fact that the two groups are distant from each other.

The ability to display simultaneously two or more groups of nodes, each group being defined by a focus node, helps comprehend large information networks.

Figure 1C shows a solution to a related problem. Figure 1B showed how the system can display multiple subnetworks that are topologically distant from each other. Figure 1C shows a solution to the problem of displaying nodes or subnetworks that are topologically close to each other but separated on the display merely because the display contains so much to display. Figure 1C shows two subnetworks 16 and 17 joined by nodes A and B. Reference number 16' shows the first subnetwork after the user has selected node A as a focus node. A dynamic layout generation algorithm regenerates the display layout in order to show neighbours of focus nodes up to a certain depth, which means that node B is displayed near node A. In an analogous manner, reference number 17' shows the second subnetwork after the user has selected node B as a focus node. Node A is dynamically brought into the vicinity of the focus node B.

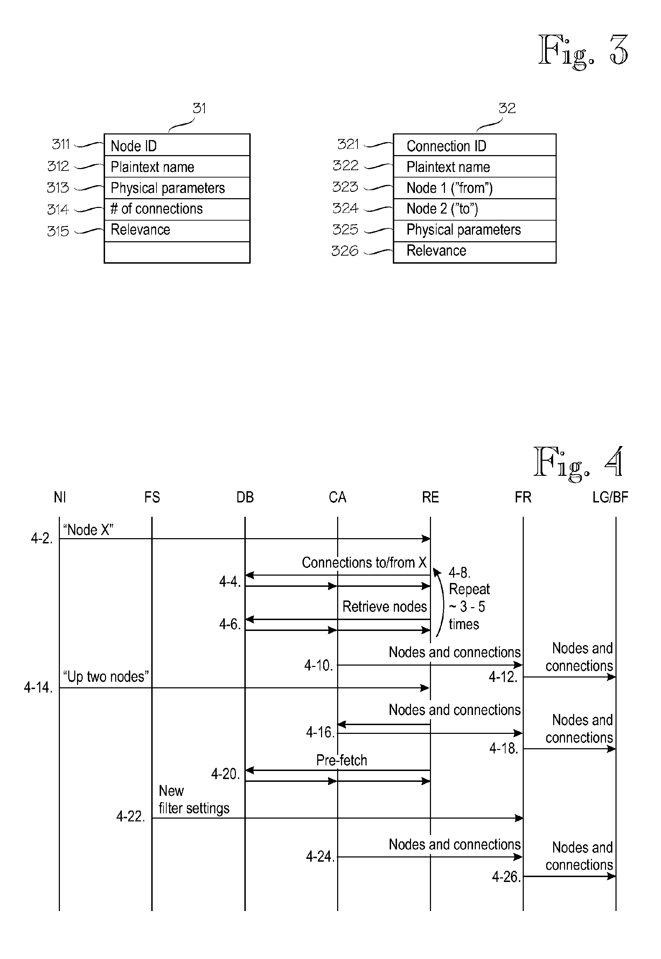

Figure 2 shows a preferred information management system ("IMS") for storing biochemical information. The nodes and connections are stored in a database DB that is accessible from one or more terminals TE. The terminals TE are typically graphical workstations or general-purpose computers. Each terminal TE has a display DI for visualizing the network. The contents of the display are temporarily stored in a display buffer BF from which the contents are rendered to the display DI. In the context of the present invention, the focus of interest is in which nodes and connections are fetched from the database DB to the display buffer BF. As to the rendering process from the display buffer BF to the display DI, any rendering technique known to those familiar with graphic editor programs can be used.

Reference sign NI denotes a user's navigation input. The navigation input NI is entered via input means IN, which typically comprises a keyboard and some pointing device (mouse, tablet, joystick, speech recognition device or the like), as well as a user interface logic for accepting the navigation input from the user. The navigation input may explicitly indicate the name or identifier of a node or connection, or it may comprise a database query based on physical properties, or it may be a relative input from a pointing device to navigate in a certain direction.

There is also a predetermined (but modifiable) rule set RS for storing rules such as 1) "display nodes that are reachable from node $X$ by no more than $n$ consecutive connections"; and 2) "suppress connections via nodes that have over $p$ connections". In this example, node $X$ is the user's focus of interest. There are also filter setting means FS for setting the parameters used by the rule set RS, such as the numbers $n$ and $p$ above. The filter setting means FS may (or may not) be controlled by the same hardware (mouse, keyboard, etc.) that is used to enter the navigation input, and only the user interface logic must be different. For example, the user interface logic may reserve an area of the display for certain slider controls that are responsive to dragging with a mouse.

A retrieval engine RE retrieves nodes and connections from the database on the basis of the currently displayed section of the network and the user's navigation input NI as well as the network topology. A filter FR filters the results and passes only nodes and connections that meet the rules in the rule set RS as adjusted by the filter settings FS. An optional cache CA eliminates the need for a new database retrieval operation each time the user's navigation input NI or the filter settings FS change.

A layout generator LG assigns a layout to the displayed network portion. Some networks, such as maps or printed-circuit layouts, have inherent layouts, but most information networks don't, and a layout must be generated on the fly. Preferred layout generation algorithms will be described later, but for the purposes of Figure 2, it suffices to say that the layout generator LG assigns display coordinates to one or more groups of nodes around one or more user-selected focus nodes. In doing so, the layout generator LG implements some optimization algorithms to clarity of the display. For instance, the layout generator LG may place nodes such that the combined length of displayed connections is minimized, or the number of connection intersections is minimized, or the like.

The output of the layout generator LG, ie, the displayed nodes and connections, their annotations and display coordinates, are stored in a display buffer BF. The contents of the display buffer BF may bee too large to be displayed at once on the display DI, and the user is typically allowed to perform zoom and pan operations within the contents of the display buffer BF, without triggering a regeneration of the display buffer BF.

Layout generators are commercially available, for example, from Tom Sawyer Software@, www.tomsawyer. com. But some of the problems of the prior art network visualization techniques seem to reflect the fact that the retrieval engine RE and/or the filter FR with its rule set RS are made by a firm that understands network application in a particular discipline (such as biotechnology or electric power distribution), while the layout generator LG is of a generic nature. This result in poor interaction between the layout generator and its preceding elements. When the retrieval engine RE (and, optionally, the filter FR and rule set RS) apply a certain graph (set of nodes, connections and a n-notations) to the layout generator LG, the layout generator thinks the graph is a complete network and fails to display any explicit indicators (item 15 in Figure 1B) next to nodes that have non-displayed neighbours. The same problem is seen downstream of the layout generator: when the uses zoom and pans to show only a portion of the display buffer, non-displayed neighbours are indicated by long lines leading out of the display area, which only clutter the display (see eg the lines leading from node "white_house" in Figure 1A).

In terms of hardware implementation, the terminals TE are typically conventional general-purpose computers or graphical workstations. The database DB is preferably implemented as networked storage that is scalable up to several millions of nodes, along with their related connections and annotations. The retrieval engine RE is typically part of a database management package that supports a query language, such as SQL (Structured Query Language). The database DB and the retrieval engine RE should be able to respond quickly to complex queries. The cache CA is normally part of the terminal's memory (RAM and/or hard disk). The filter FR can be implemented as a software process that retrieves elements from the cache and stores in the display buffer BF only those elements that meet the set of rules RS. The display buffer BF is also part of the terminal's memory. The zoom and pan logic is implemented as software routines that respond to the navigation input NI from the input device IN and display a subset of the contents of the display buffer BF, which is the output of the layout generator LG. Each rule in the rule set RS comprises two parts, namely a displayable rule to be displayed to the user and a logic that implements the rule. Depending on the complexity of the rule, the logic can be written in a scripting language or a general-purpose programming language.

Note that Figure 2 shows an exemplary embodiment, and many variations are possible. For instance, it is not absolutely necessary to store the node and connection information explicitly in the cache CA, as shown in Figure 2. Instead, it is possible to store only the connections explicitly, and retrieve the node information from the database DB for each displayed connection.

Also, it is possible to install the cache between the retrieval engine and the database DB, instead of the placement shown in Figure 2, or in addition to it. For example, in a networked environment, the cache CA may be implemented in a network server. The server-based cache may provide some synergy benefits in an organization in which several researches are working on the same sections of the information network simultaneously. In such a case, elements needed by one researcher are likely to be needed by others. Yet fu r-ther, the server-based cache may simplify relaying of modifications to others. Consider a case in which one researches finds a new inter-node relation, such as a new biochemical relation. This new relation is updated to the database DB. If the cache resides in the server, the updated cache status is immediately available to all users. In contrast, a workstation-based cache implementation needs complex signalling between the server and workstations if changed elements are to be immediately available to all users. For instance, the database maintenance logic at the server should, in response to updati ng an entity, signal that update to the workstations so that they can delete the entity from their caches or re-fetch the updated entity into their caches. On the other hand, the cache placement shown in Figure 2 has the benefit that changed filter settings do not necessarily trigger a new database query.

Reference sign PF denotes a pre-fetch logic for anticipating the user's next navigation input. If the user's latest navigation input is one node upwards, the system may extrapolate that input and prepare for another input in the same direction by pre-fetching network elements in that direction from the database DB to the cache CA. If the cache becomes full, existing elements in the direction opposite to the extrapolated input may be deleted from the cache. The relevance fields 315 326 (see Figure 3) may be used in this process, by increasing the relevance of elements in the anticipated direction and or decreasing the relevance of elements in the opposite direction.

In addition to the logic elements shown in Figure 2, the database maintenance logic preferably executes background processes for updating characteristic parameters of the information network, such as the total number of nodes and connections, connectivity parameters and the like. Such bac k-ground processes provide a speed advantage compared to a system that begins to compute such statistics in response to a query from a user.

Figure 3 shows an exemplary node record 31 and connection record 32. Some of the information elements in the node and connection records 31, 32 may be permanently stored in a database, while some elements may be temporary elements that are only maintained while the node or connection record is kept in the cache CA (see Figures 2 and 4). The nodes and connections may be stored as information tuples or records having multiple fields. Each node must have at least a node identifier field 311, and it typically has a plaintext name or description 312 which is more informative to humans than a mere identifier. Each node represents some physical entity, the physical parameters of which are collectively shown as a physical parameters field 313. Fields 311 to 313 are stored in the database DB. In some applications, such as modelling of physical networks, it is beneficial to have a field (not shown here) for the node's geographical coordinates, but even if such geographical coordinates are stored in the node record, the visual layout is largely independent of them.

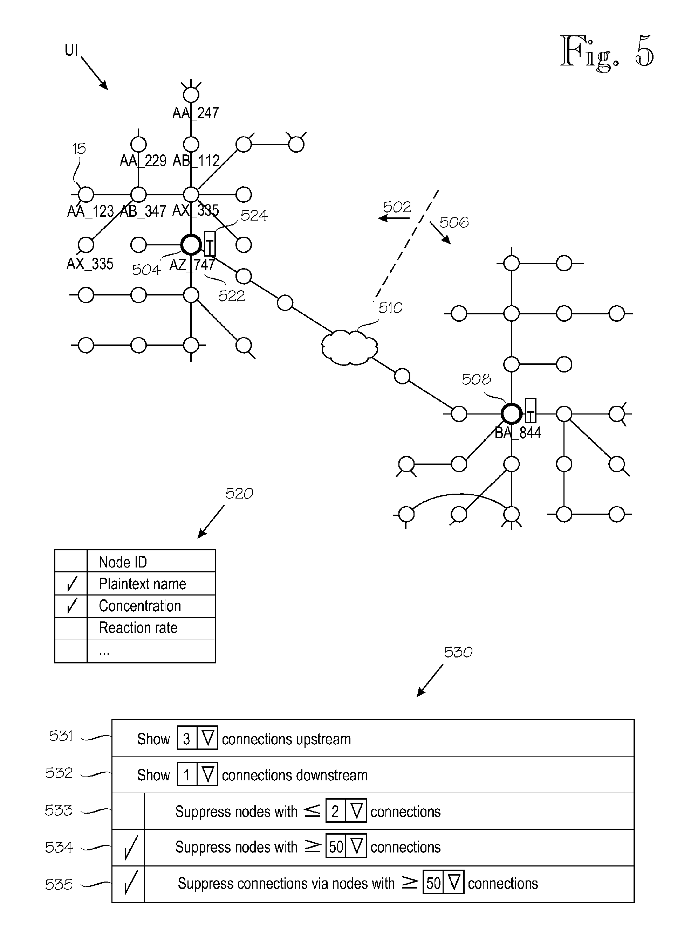

Fields 314 and 315 represent information elements that are typically not stored in the database but maintained while the node is kept in the cache CA. These fields may provide additional benefits but they are not essential for the invention. Field 314 indicates the number of connections to/from the node. This number will be used by some of the rules in the rule set RS (see Figures 2 and 5). As an alternative to having an explicit field 314, the number of connections to/from the node can be calculated "on the fly", based on the connection records 32 that relate to the node in question.

A connection record or information tuple 32 has at least an identifier (ID) 321 field. Normally it also comprises a field for a plai ntext name 322 of the connection. There are two fields 322, 323 that indicate the end nodes of the connection. If the connections are directional, one of the fields 322, 323 indicates a start node and the other field indicates the corresponding end node of the connection. Directional connections will be further described under the subtitle "directional connections". Depending on the application, the connection record 32 may also comprise physical parameters 325. The "to" and "from" node fields 323, 324 and the node identifier fields 311 collectively define the topology of the information network.

Fields 315 and 326, called "relevance", are also temporary and optional fields. The caching logic in connection with the retrieval engine may use the relevance fields to determine whether or not a node or connection is to be kept in the cache CA. For example, on a scale of 0 to 10, the node at the user's focus of interest may score 10, the connections leading to/from it score 9, the node's immediate neighbours score 8, and so on. When the user navigates in a certain direction, nodes and connection in that direction have their relevance scores increased and vice versa.

If a common cache CA serves multiple users, sessions and or windows, the node and connection records 31, 32 must also indicate the user, session and window that the record relates to.

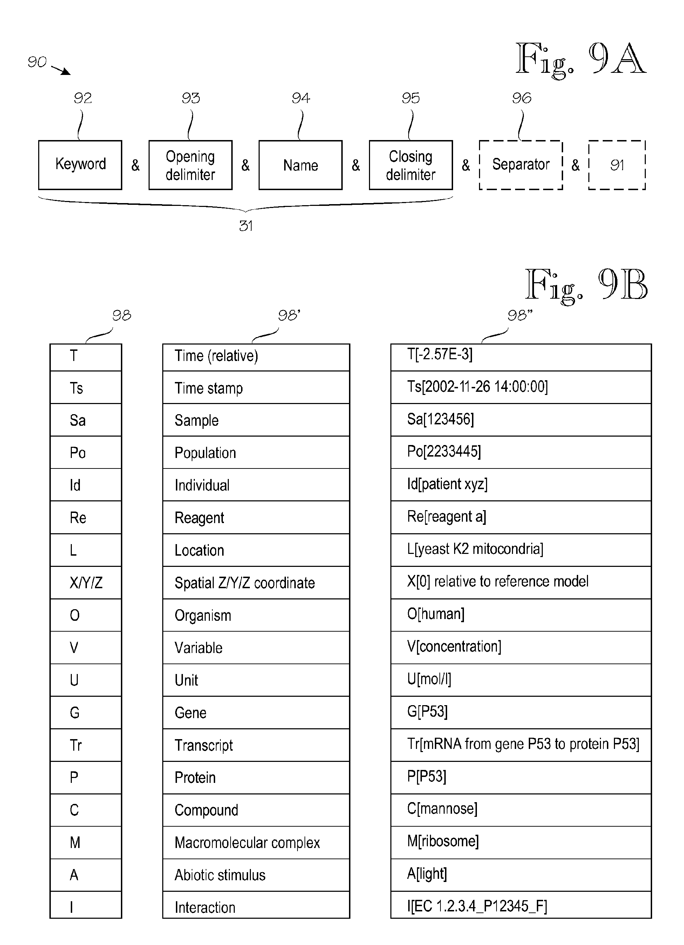

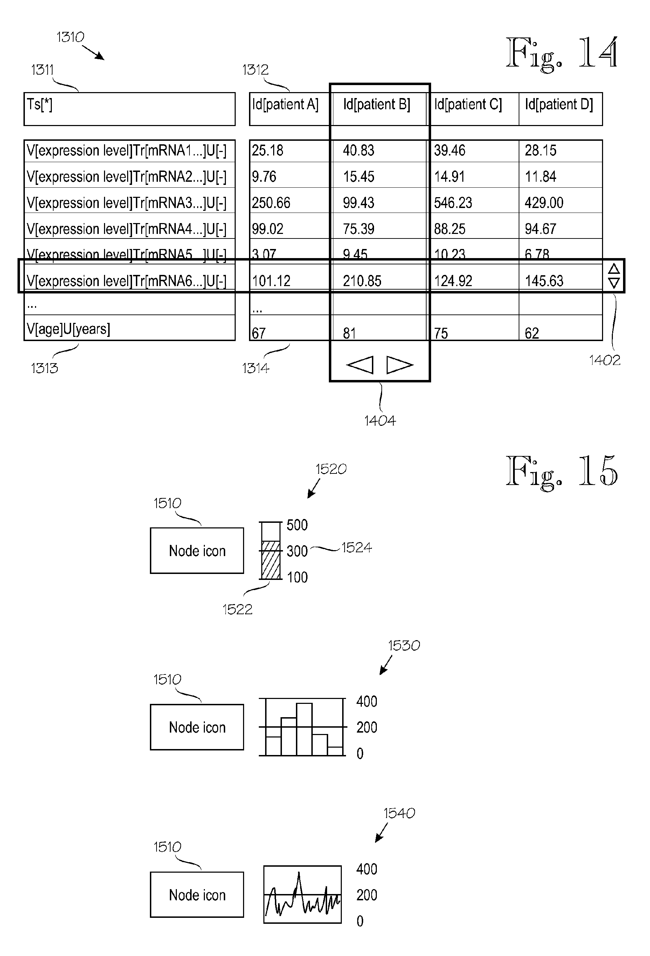

Figure 4 is a signalling diagram that illustrates the operation of the system as shown in Figure 3. In step 4-2, the user enters a navigation input NI, which means that he wishes to navigate to node *X*. For example, the user may enter the plaintext name 312 of node *X* from the keyboard. If the database DB stores the nodes and connections in a variable description language disclosed in connection with Figures 9A to 10, the navigation input NI may be of the form "V[concentration]U[mol/l]C[mannose]", in order to direct the user to a node that has the desired concentration of mannose. Thus during a typical session, the navigation input NI comprises explicit plaintext names, movements of a pointer device (mouse, arrow keys, etc.) and expressions in the variable description language. Navigation techniques will be further described in connection with Figures 14 and 18A to 19.

In step 4-4, the navigation input NI is processed by the retrieval engine RE. Assuming that the first navigation input comprises a node's plaintext name 312, the retrieval engine RE first retrieves the node record 31 that matches the plaintext name. Next, in step 4-6, the retrieval engine RE retrieves the connections that begin form node Xor terminate to it (fields 323 and 324) and extracts the other nodes indicated by those connections. These are nodes that are connected to node X via precisely one connection. To speed up future operations, the result of the database queries 4-4 and 4-6 are stored in the optional cache CA. Next, let us assume that the display DI is sufficiently large to display nodes that are at most three connections away from node X. The maximum number of connections that separates the user's focus of interest and the last node retrieved from the database can be called the depth of the search. The depth is preferably user-settable. There may be separate depth settings for what is retrieved from the database DB to the cache CA and for what is actually displayed on the display DI.

In order to have sufficient data to display, the retrieval engine RE recursively repeats steps 4-4 and 4-6. This recursion is shown as step 4-8. After the recursive repetition of steps 4-4 and 4-6, the cache CA stores nodes that are at most three to five hops away from node X, depending on the number of recursion loops. The reason for recursively repeating the retrieval process for over three levels (wherein three is the number of hops that can be shown on the display at any given time) is that a slight change in the navigation input, such as change of focus to the immediate right-hand neighbour, will not trigger a new database retrieval process.

In step 4-10, when a sufficient number of node and connection records 31, 32 have been retrieved from the database DB to the cache CA, the node and connection records 32, 32 are processed by the filter FR. In step 4-12, the filter FR considers the rule set RS and filter settings FS and applies to the layout generator LG and display buffer BF only those node and connection records 32, 32 that meet the set of rules as adjusted by the filter settings. The display buffer BF contains the nodes and connections that are actually displayed on the display DI.

The rules and filter settings will be further discussed in connection with Figure 5 and a subheading "rules". The process of displaying nodes and connections will also be further discussed in connection with Figure 5.

In step 4-14, the user enters a new navigation input, such as "up two nodes". For example, he may use the mouse to select a node that is two nodes higher than node *X* that was the previous focus of interest. In step 4-16, assuming that the cache CA stores the requested nodes and connections, they are applied to the filter FR, and in step 4-18 the filter FR applies to the layout generator LG and display buffer BF the nodes and connections that meet the set of rules RS. If the cache CA does not store the nodes and connections that match the user's new navigation input NI, more data must be retrieved from the database DB, similar to steps 4-4 through 4-8 shown above.

In an optional step 4-20, the retrieval engine RE anticipates the user's further movement and retrieves more data from the database DB to the cache CA. The cache CA contains a larger subset of elements than the display buffer BF does, which results is a fast response to the user's navigation input.

In step 4-22, the user adjusts the filter settings FS. For example, he may find the display too cluttered and opts to have some elements suppressed. The filtering process is repeated with the adjusted filter settings in steps 4-24 and 4-26.

### Rules and filters

The set of rules was generally shown as a rule set RS in Figure 2. Each field of application, such as microbiology, telecommunication or electrical network planning, requires its own rules and/or filters. There is no clear-cut difference between a rule and a filter, but it is more intuitive to say that rules specify in a positive sense what is included in a subnetwork and filter specify in a negative sense what will not be included or displayed. Next, we will discuss some rules that are particularly useful in processing biochemical information.

A very useful rule is "display neighbour nodes of focus nodes via N connections". If the connections are directional (information flow is not reversible), the rule should be modified to "display neighbour nodes of focus nodes via N connections in each direction (upstream and downstream)". The number N is called a depth setting and it should be user-settable. If the depth is high, the subnetworks around each focus node will be large and few subnetworks can be displayed simultaneously, and vice versa. In some cases it is beneficial to allow the user set the depth separately for upstream and downstream neighbours. For instance, the user may wish to see what nodes cause a change in a node's behaviour. In that case upstream neighbours are more important than downstream neighbours. On the other hand, the user may wish to see what other nodes are affected by a focus node, in which case downstream neighbours are more important.

It is also beneficial to be able to see downstream neighbours of upstream nodes and vice versa, up to a second depth setting M, which also should be user-settable. In a simpler embodiment, the second depth setting may be fixed to one, which means that precisely one downstream neighbour of upstream neighbours and one upstream neighbour of downstream neighbours will be displayed. In a particularly preferred embodiment the user will be able to set an upper limit L for the sum of the two depth settings N and M such that the following is true: $0 \leq N + M \leq L$. For example, if $N = L = 4$ and $M = 1$, then upstream and downstream neighbours are displayed up to fourth generation from each focus node and each neighbour node up to third generation has one generation of neighbours displayed in the opposite direction. Such a situation will be shown in Figure 18A. The nodes at the topological border of each subnetwork should have its non-displayed neighbour element (item 15 in Figure 1B) displayed.

One of the problems in displaying large information networks is caused by the fact that some nodes and/or connections relate to an unmanageable number of other nodes and/or connections. For example, in biochemical information networks, water and ribosome are examples of molecules that participate in virtually every biochemical reaction. In other words, water and ribosome are immediate neighbours of virtually every other molecule (node). This has the consequence that any two molecules are reachable from each other via water or ribosome and at most two connections, whereby the very concept of "neighbour" becomes meaningless. A similar situation exists in some electronic circuits in which power supply lines and a system clock are immediate neighbours of virtually every node.

This problem can be solved by implementing a rule "ignore connections via molecules (nodes) that have Y or more neighbours (connections)". Ignoring a connection means that two molecules are not treated as reachable from each other via two hops if the two hops are to/from a node having Y or more neighbours. The effect of this rule is that the ever-present connections via such ubiquitous nodes are suppressed, and the concept of "neighbour" becomes restores its meaning.

In addition to ignoring connections via nodes with a large number of connections (neighbours), there may be a rule to "suppress displaying molecules (nodes) that have Y or more neighbours".

Another useful rule is "display only molecules (nodes) that have W or more neighbours (connections)". With this rule on, users can ignore molecules with a very small number of connections and concentrate on nodes that have a reasonably large number of connections.

The rules described above relate to the network topology, ie, the neighbourhood relations between the various nodes and the number of connections via the nodes. In addition to topology-related rules, the database retrieval process may be subject to conventional database criteria, provided that the node records 31 and/or the connection records 32 store the necessary information. For example, the user may opt to select only substances (nodes) of which no harmful side-effects are stored in the database.

**Displaying of selected and filtered elements**

The description of Figures 2 and 4 stated that the display buffer BF stores the elements (nodes and connections) to be displayed, but how the elements are displayed has been an open question until now. In addition to showing mere symbols for the nodes and connections, such as a circle for each node and a line for each connection, it is often necessary or useful to display some identification data or other parameters next to each node and connection. (In some applications, such as electronic circuits, the nature of connections may be self-evident, and a simple line without identification data is sufficient). The identification data, such as each node's identifier 311 and/or plaintext name 312 are stored in the node records 31. In some embodiments, the parameters to be displayed can be selected by allowing the user to individually select or unselect the displaying of each field in the node records 31 and connection records 32.

There are several strategies for populating the display buffer BF (assigning display coordinates to the nodes, connections, annotations, etc.) In some applications, such as large-area networks, power grids and travel planning, each node has an inherent geographical location, and it is intuitive to users to sort the displayable nodes according to the geographical locations. This does not mean, however, that the underlying geographical locations should be reproduced in scale, and an intercontinental flight and a trip by train may both be hops (connections) that are represented by lines of similar length.

In other applications, such as microbiology, where there is no inherent coordinate system, the location for each displayed node can (and must) be selected on the basis of some other criteria. One strategy is to place the user's focus of interest, such as focus node(s) explicitly selected by the user, at or near the middle of the display, and place the remaining nodes with an optimization algorithm that minimizes overlapping connections and/or the combined length of connections or some weighted sum of such parameters. Such optimization algorithms are widely used in the design of printed circuit boards. Preferred node layout techniques will be further discussed in connection with Figures 18A to 18D.

**User interface**

Figure 5 shows some elements of a preferred user interface, generally denoted by reference sign UI. In terms of hardware, the user interface comprises the display DI and input means IN shown in Figure 2, but the hardware can be entirely conventional. For the purposes of the invention, the logic of the user interface is much more interesting.

Figure 5 shows a user interface that lets the user select several areas of interest even if the areas of interest are topologically distant from each other. In this example, there are two areas of interest. A first area 502 is around node 504 and the other area 506 is around node 508. The two areas are connected by a cloud 510, which indicates that the number of hops between the nodes 504 and 508 is so large that normally the these nodes would not be shown simultaneously. But there may be other relations, apart from topology, between these nodes, which is why the user may wish to see these nodes and their surroundings simultaneously. For instance, the user may contemplate adding a new topological connection between these nodes.

Reference sign 520 denotes a user interface element that lets the user select which items of the node or connection records 31, 32 are displayed next to the node or connection in question. In the example shown in Figure 5, the user has selected to display each node's plaintext name and a numerical parameter, such as some concentration value, next to each node. By way of example, reference numeral 522 denotes the plaintext name of node 504 and reference numeral 524 is a graphic indicator of the concentration of some biomaterial at node 504. For example, the graphic indicator 524 next to node 504 may represent the concentration of mannose at node 504 in a biochemical pathway. Presentation of node-related numerical parameters will be further discussed in connection with Figure 15.

Reference sign 530 generally denotes a user interface element that lets the user adjust the filter settings, generally denoted by reference sign FS in Figure 2. User interface elements 531 and 532 let the user select how many levels of neighbour nodes will be displayed. In this example, the connections are assumed to be directional, and there is a separate setting for upstream and downstream neighbours. User interface element 533 lets the user adjust a rule to suppress nodes with at most two connections, but in the example shown, this rule is deactivated. User interface elements 534 and 545 let the user adjust rules to suppress nodes with at least 50 connections and to suppress connections via such nodes, respectively. Such nodes may represent ever-present elements, such as power supply and clock in electronic networks, or water and ribosome in biochemical information networks. Elimination of such ever-present elements lets the user see more interesting elements.

**Database structure**

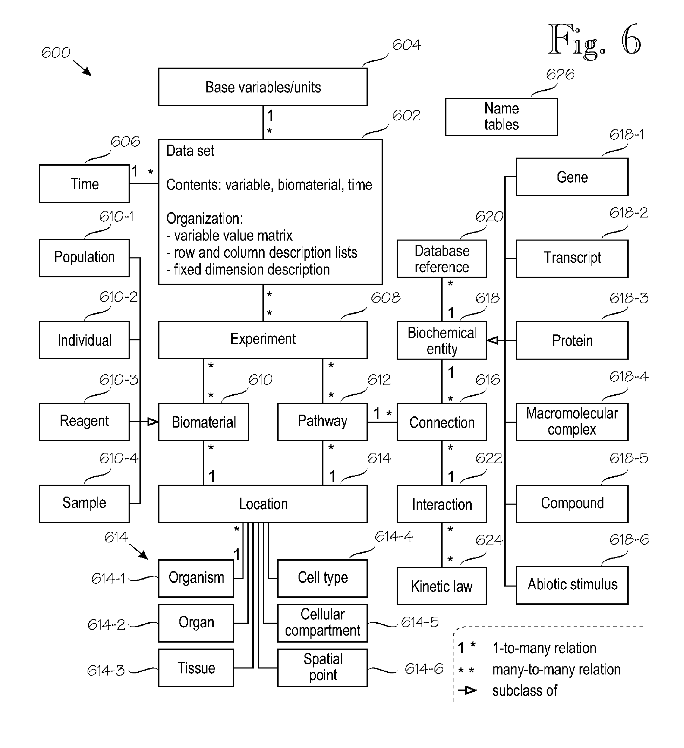

Figure 6 is an entity-relationship model of a database structure 600 of the IMS. The database structure 600 comprises the following major sections: base variables/units 604, data sets 602, experiments 608, biomaterials 610, pathways 612 and, optionally, locations 614.

Data sets 602 describe the numerical values stored in the IMS. Each data set is comprised of a variable set, biomaterial information and time organized in

- a variable value matrix for describing variable values in a row-column organization;
- a row description list, in a variable description language, of the rows in the variable value matrix;
- a column description list, in a variable description language, of the columns in the variable value matrix; and
- a fixed dimension description, in a variable description language, of one or more fixed dimensions that are common to all values in the variable value matrix.

The variable description language binds syntactical elements and semantic objects of the information model together, by describing what is quantified in terms of variables (eg count, mass, concentration), units (eg pieces, kg, mol/l), biochemical entities (eg specific transcript, specific protein, specific compound) and a location where the quantification is valid (eg human_eyelid_epith_nuc) in a multi-level location hierarchy of biomaterials (eg environment, population, individual, reagent, sample, organism, organ, tissue, cell type) and relevant expressions of time when the quantification is valid.

Note that there are many-to-many relationships from the base variables/units section 604 and the time section 606 to the data set section 602. This means that each data set 602 typically comprises one or more base variable/units and one or more time expressions. There is a many-to-many relationship between the data set section 602 and the experiments section 608, which means that each data set 602 relates one or more experiments 608, and each experiment relates to one or more data sets 602. A preferred implementation of the data sets section will be further described in connection with Figures 6A to 6C.

The base variables/units section 604 describes the base variables and units used in the IMS. In a simple implementation, each base variable record comprises unit field, which means that each base variable (eg mass) can be expressed in one unit only (eg kilograms). In a more flexible embodiment, the units are stored in a separate table, which permits expressing base variables in multiple units, such as kilograms or pounds.

Base variables are variables that can be used as such, or they can be combined to form more complex variables, such as the concentration of a compound in a specific sample at a specific point of time.

The time section 606 stores the time components of the data sets 602. Preferably, the time component of a data set comprises a relative (stopwatch) time and absolute (calendar) time. For example, the relative time can be used to describe the speed with which chemical reactions take place. There are also valid reasons for storing absolute time information along with each data set. The absolute time indicates when, in calendar time, the corresponding event took place. Such absolute time information can be used for calculating relative time between any experimental events. It can also be used for troubleshooting purposes. For example, if a faulty instrument is detected at a certain time, experiments made with that instrument prior to the detection of the fault should be checked.

The experiments section 608 stores all experiments known to the IMS. There are two major experiment types, commonly called wet-lab and in-silico. But as seen from the point of view of the data sets 602, all experiments look the same. The experiments section 608 acts as a bridge between the data sets 602 and the two major experiment types. In addition to experiments already carried out, the experiments section 608 can be used to store future experiments.

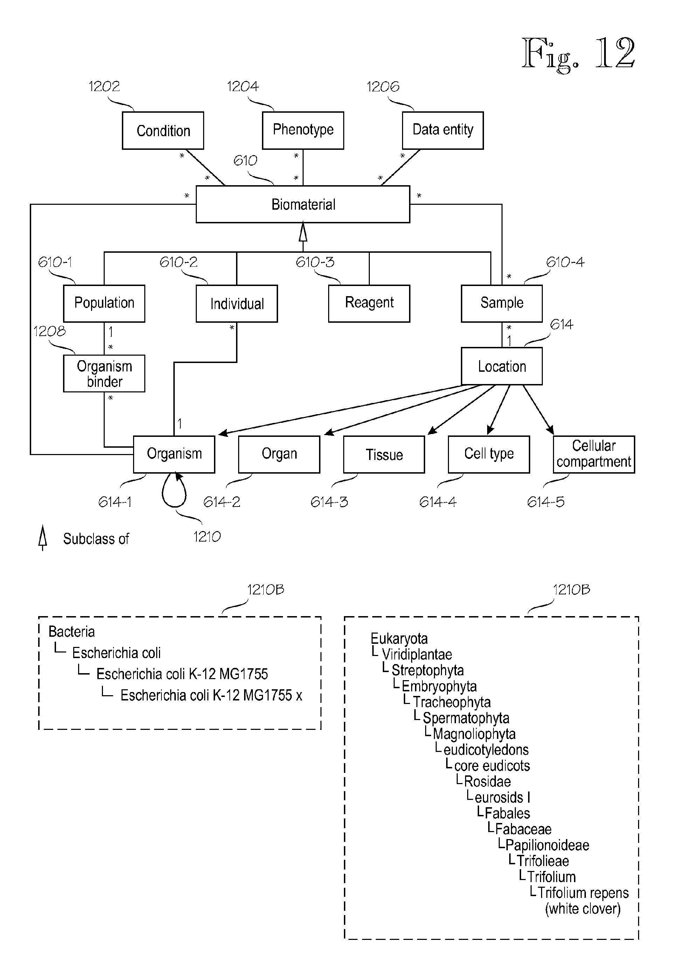

The biomaterial section 610 stores information about populations, individuals, reagents or samples of other biomaterials (anything that can be studied as a biochemical system or its component) in the IMS. Preferably, the biomaterials are described in data sets 602, by using a variable description language ("VDL") to describe each biomaterial hierarchically, or in varying detail level, such as in terms of population, individual, reagent and sample. A preferred variable description language will be described in connection with Figures 9A to 11. A preferred object-based implementation of the biomaterials section 610 will be described in connection with Figure 12.

While the biomaterial section 610 describes real-world biomaterials, the pathway section 612 describes theoretical models of biomaterials. Biochemical pathways are somewhat analogous to circuit diagrams of electronic circuits. There are several ways to describe pathways in an IMS, but Figure 6 outlines an advantageous implementation. In the example shown in Figure 6, each pathway 612 comprises one or more connections 616, each connection relating to one biochemical entity 618 and one interaction 622.

The biochemical entities are stored in a biochemical entity section 618. In the example shown in Figure 6, each biochemical entity is a class object whose subclasses are gene 618-1, transcript 618-2, protein 618-3, macromolecular complex 618-4 and compound 618-5. Preferably, there is an option to store abiotic stimuli 618-6, such as temperature, having potential connections to interactions and potential effects to relevant kinetic laws.

A database reference section 620 acts as a bridge to external databases. Each database reference in section 620 is a relation between an internal biochemical entity 618 and an entity of an external database, such as a specific probe set of Affymetrix inc.

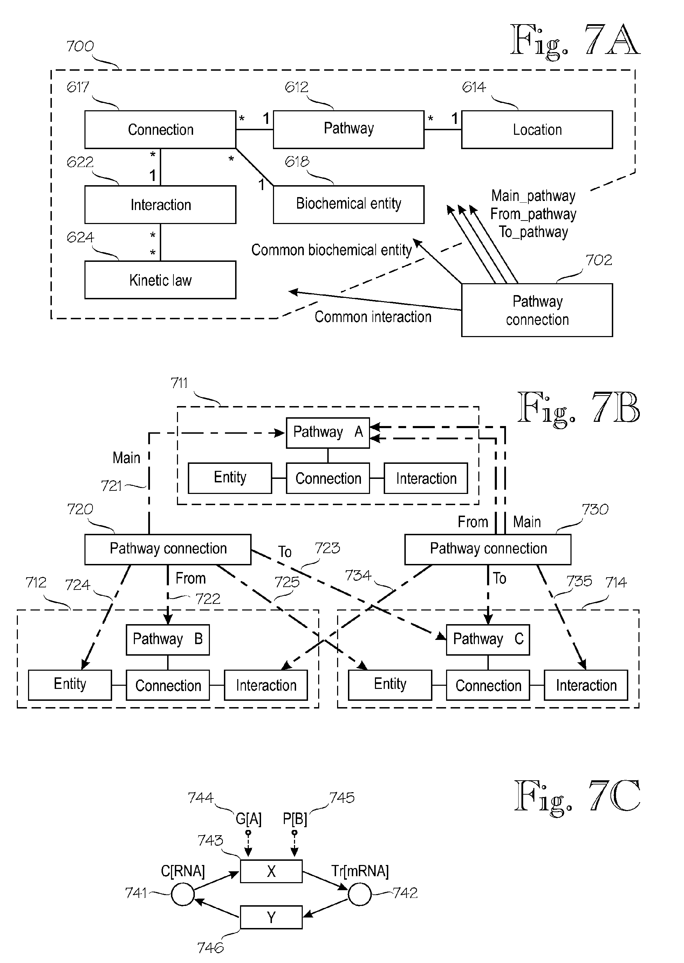

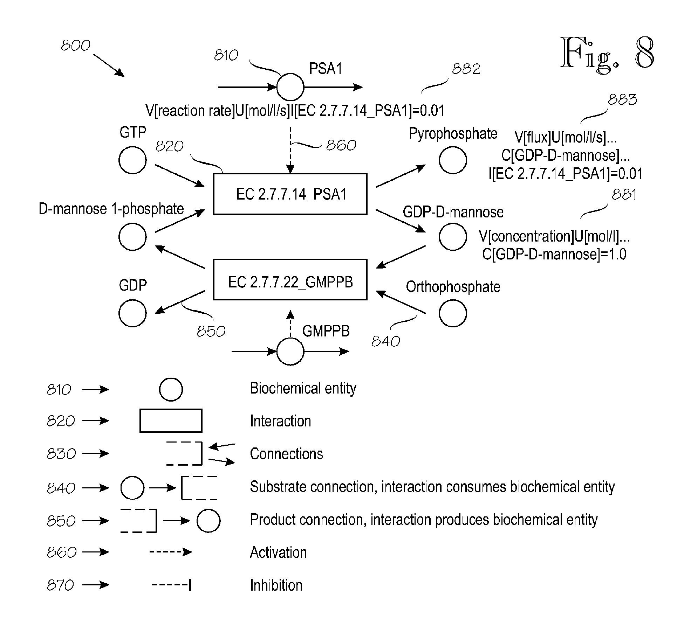

The interactions section 622 stores interactions, including reactions, between the various biochemical entities. The kinetic law section 224 describes kinetic laws (hypothetical or experimentally verified) that affect the i n-teractions. Preferred and more detailed implementations of pathways will be described in connection with Figures 7A, 7B and 8.

According to a preferred embodiment of the invention, the IMS also stores multi-level location information 614. The multi-level location information is referenced by the biomaterial section 610 and the pathway section 612. For instance, as regards information relating to biomaterials, the organization shown in Figure 6 enables any level of detail or accuracy, from population level at one end down to spatial points (coordinates) within a cell at the other end. In the example shown in Figure 6, the location information comprises organism 614-1 (eg human), organ 614-2 (eg heart, stomach), tissue 614-3 (eg smooth muscle tissue, nervous tissue), cell type 614-4 (eg columnar epithelium cell), cellular compartment 614-5 (eg nucleus, cytoplasm) and spatial point 614-6 (eg x = 0.25, y = 0.50, z = 0.75 relative to the dimensions of a rectangular reference cell). The organism is preferably stored as a taxonomy tree that has a node to each known organism. The organ, tissue, cell type and cellular compartment blocks can be implemented as simple lists. A benefit of storing the location information as a reference to the predefined lists is that such referencing forces an automatic syntax check. Thus it is impossible to store a location information that references a non-existent or misspelled organ or organism.

According to a further preferred embodiment of the invention, the location information can also comprise spatial information 614-6, such as a spatial point within the most detailed location in the organism-to-cell hierarchy. If the most detailed location indicates a specific cell or cellular compartment, the spatial point may further specify that information in terms of relative spatial coordinates. Depending on cell type, the spatial coordinates may be Cartesian or polar coordinates.

In addition to the six levels of location hierarchy shown in Figure 6, it is advantageous to add some more relations to the organism. Relations particularly advantageous with the organism include, from specific to generic:

individual, population and environment. With this arrangement of levels, a biochemical entity (such as a sample) can be associated to virtually any location on earth, with any desired resolution, down to a specific spatial coordinate within a cell.

A benefit of this kind of location information is an improved and systematic way to compare locations of samples and locations of theoretical constructs like pathways that need to be verified by relevant measurement results.

The multi-level location hierarchy shown in Figure 6 is particularly advantageous in connection with modern gene manipulation techniques, such as gene transfer and cloning. In comparison, some prior art systems label biological entities with simple text concatenations (such as "murine_P53"). Such a simple text concatenation hard-codes a specific organism to a specific location. If the location of the biological entity changes, its name changes as well, which disrupts the integrity of a well-defined database system. In contrast, the IMS as shown in Figure 6 can easily identify a pig's P53 gene transplanted to a mouse, for example, or make a distinction between a parent organism and a cloned one.

**Pathways**

Figure 7A is a block diagram of a pathway as stored in the IMS. An IMS according to a preferred embodiment of the invention describes each biochemical system by means of a structured pathway model 700 of system components and inter-component connections. The system components are biochemical entities 618 and interactions 622. The connections 616 between the biochemical entities 618 and interactions 622 are recognized as independent objects representing the role (eg substrate, product, activator or inhibitor) of each biochemical entity in each interaction for each pathway. A connection can hold attributes that are specific to each biochemical entity and interaction pair (such as a stoichiometric coefficient). As stated earlier, the IMS preferably stores location information, and each pathway 612 relates to a biological location 614. One biological location might be described by one or more pathways depending on the level of details that have been included into a pathway.

As shown in Figure 7A, each connection 616 acts as a T joint that joins three elements, namely an interaction 622, a biochemical entity 618 and a pathway 612. In other words, the join of an interaction 622 and a biochemical entity 618 is pathway-specific, as opposed to global. This means that a biochemical researcher can change the interaction data relating to a given biochemical entity, and the change only affects the specific pathway indicated by the pathway element 612. This feature is believed to lower the psychological threshold faced by researchers to make changes to a pathway definition.

In an object-based implementation, the biochemical pathway model is based on three categories of objects: biochemical entities (molecules) 618, interactions (chemical reactions, transcription, translation, assembly, disassembly, translocation, etc) 622, and connections 616 between the biochemical entities and interactions for a pathway. The idea is to separate these three objects in order to use them with their own attributes and to use the connection to hold the role (such as substrate, product, activator or inhibitor) and stoichiometric coefficients of each biochemical entity in each interaction that takes place in a particular biochemical network. A benefit of this approach is the clarity of the explicit model and easy synchronization when several users are modifying the same pathway connection by connection. The user interface logic can be designed to provide easily understandable visualizations of the pathways, as will be shown in connection with Figure 8.

The kinetic law section 624 describes theoretical or experimental kinetic laws that affect the interactions. For example, a flux from a substrate to a chemical reaction can be expressed by the following formula:

$$V = \frac{Vmax \cdot [S] \cdot [E]}{K + [S]}$$

wherein V is the flux rate of the substrate, Vmax and K are constants, [S] is the substrate concentration and [E] is the enzyme concentration. The reaction rate through the interaction can be calculated by dividing the flux by the stoichiometric coefficient of the substrate. Conversely, each kinetic law represents the reaction rate of an interaction, whereby any particular flux can be calculated by multiplying the reaction rate by the stoichiometric coefficients of the particular connections. The above kinetic law as the reaction rate of interaction EC2.7.7.14_PSA1 in Figure 8 can be expressed in VDL as follows:

V[rate]I[EC2.7.7.14_PSA1] =

Vmax•V[concentration]C[GTP]•V[concentration]P[PSA1]/(K +

V[concentration]C[GTP])

The flux from interaction EC2.7.7.14_PSA1 to compound GDP-D-mannose can be expressed in VDL as follows:

$$V[flux]I[EC2.7.7.14\_PSA1]C[GDP\text{-}D\text{-}mannose] =$$

$$c1\bullet V[rate]I[EC2.7.7.14\_PSA1] =$$

$$Vmax\bullet V[concentration]C[GTP]\bullet V[concentration]P[PSA1]/(K$$

$$+ V[concentration]C[GTP]),$$

where c1 is the stoichiometric coefficient of the connection from interaction EC2.7.7.14_PSA1 to compound GDP-D-mannose and c1 = 1.

In the above example, the kinetic law is a continuous function of variables V[concentration]C[GTP] and V[concentration]P[PSA1]. In addition, a proper description of some pathways requires discontinuous kinetic laws.

Figure 7C shows a visualized form of a hybrid pathway model that comprises both analogue (continuous) and Boolean (discrete) equations. In this model, compound RNA 741 is converted to transcript mRNA 742 via interaction (reaction) X 743 but only if gene A 744 and protein B 745 are present. Interaction Y 746 is the inverse process of interaction X 743 and transforms transcript mRNA back to compound RNA.

The kinetic law as the reaction rate of interaction X in Figure 7C can be expressed as a discontinuous Boolean function of VDL conditions as follows:

$$V[rate]I[X] =$$

$$k\ IF\ V[count]G[A] > 0\ AND\ V[count]P[B] > 0\ and\ V[count]C[RNA] > 0\ ELSE\ 0$$

The flux from interaction X to transcript mRNA can be expressed in the VDL as follows:

$$V[flux]I[X]Tr[mRNA] =$$

$$c2\bullet V[rate]I[X] =$$

$$k\ IF\ V[count]G[A] > 0\ AND\ V[count]P[B] > 0\ and\ V[count]C[RNA] > 0\ ELSE\ 0$$

where c2 is the stoichiometric coefficient of the connection from interaction X to transcript mRNA and c2 = 1.

Let the flux from interaction Y to compound RNA in Figure 7C be a continuous function of the count of transcript mRNA as follows:

$$V[flux]I[Y]C[RNA] =$$

$$c3\bullet V[rate]I[Y] = c3\bullet k2\bullet V[count]Tr[mRNA]$$

where c3 is the stoichiometric coefficient of the connection from interaction X to transcript mRNA and k2 is another constant of this kinetic law.

Each variable represented in the kinetic laws may be specified with a particular location L[...] if the concentration or count of a biochemical entity depends on a particular location.

A biochemical network may not be valid everywhere. In other words, the network is typically location-dependent. That is why there are relations between pathways 612 and biologically relevant discrete locations 614, as shown in Figures 6 and 7A.

A complex pathway can contain other pathways 700. In order to connect different pathways 700 together, the model supports pathway connections 702, each of which has up to five relations which will be described in connection with Figure 7B.

Figure 7B shows an example of complex pathway that contains simpler pathways. Two or more pathways can be combined if they have common biochemical entities that can move as such between relevant locations or common interactions (eg translocation type interaction that moves biochemical entities from one location to another). Otherwise, the pathways are considered isolated.

Pathway A, denoted by reference sign 711, is a main pathway to pathways B and C, denoted by reference signs 712 and 713, respectively. The pathways 711 to 713 are basically similar to the pathway 700 described above. There are two pathway connections 720 and 730 that couple the pathways B and C, 712 and 713, to the main pathway A, 711. For instance, pathway connection 720 has a main-pathway relation 721 to pathway A, 711; a from-pathway relation 722 to pathway B, 712; and a to-pathway relation 723 to pathway C, 713. In addition, it has common-entity relations 724, 725 to pathways B 712 and C 713. In plain language, the common-entity relations 724, 725 mean that pathways B and C share the biological entity indicated by the relations 724, 725.

The other pathway connection 730 has both main-pathway and from-pathway relations to pathway A 711, and a to-pathway relation to pathway C, 713. In addition, it has common-interaction relations 734, 735 to pathways B, 712 and C, 713. This means that pathways B and C share the interaction indicated by the relations 734, 735.

The pathway model described above supports incomplete pathway models that can be built gradually, along with increasing knowledge. Researchers can select detail levels as needed. Some pathways may be described in a relatively coarse manner. Other pathways may be described down to kinetic laws and/or spatial coordinates. The model also supports incomplete information from existing gene sequence databases. For example, some pathway descriptions may describe gene transcription and translation separately, while other treat them as one combined interaction. Each amino acid may be treated separately or all amino acids may be combined to one entity called amino acids.

The pathway model also supports automatic modelling processes. Node equations can be generated automatically for time derivatives of concentrations of each biochemical entity when relevant kinetic laws are available for each interaction. As a special case, stoichiometric balance equations can be automatically generated for flux balance analyses. The pathway model also supports automatic end-to-end workflows, including extraction of measurement data via modelling, inclusion of additional constrains and solving of equation groups, up to various data analyses and potential automatic annotations.

Automatic pathway modelling can be based on pathway topology data, the VDL expressions that are used to describe variable names, the applicable kinetic laws and mathematical or logical operators and functions. Parameters not known precisely can be estimated or inferred from the measurement data. Default units can be used in order to simplify variable description language expressions.

If the kinetic laws are continuous functions of VDL variables, the quantitative variables (eg concentration) of biochemical entities can be modelled as ordinary differential equations of these quantitative variables. The ordinary differential equations are formed by setting a time derivative of the quantitative variable of each biochemical entity equal to the sum of fluxes coming from all interactions connected to the biochemical entity and subtracting all the outgoing fluxes from the biochemical entity to all interactions connected to the biochemical entity.

Example:

$$dV[concentration]C[GDP\text{-}D\text{-}mannose]/dV[time] =$$
$$V[flux]I[EC\ 2.7.7.13\_PSA1]C[GDP\text{-}D\text{-}mannose] + \ldots$$
$$- V[flux]C[GDP\text{-}D\text{-}mannose]I[\ EC \ldots \quad ] - \ldots$$

$$\ldots$$

$$dV[concentration\ ]C[water]/dV[time] = V[flux]C[water]I[EC \ldots \quad ] + \ldots$$
$$- V[flux]C[water]I[\ EC \ldots \quad ] - \ldots$$

On the other hand, if the kinetic laws are discontinuous functions of VDL variables, the quantitative variables (eg concentration or count) of biochemical entities can be modelled as difference equations of these quantitative variables. The difference equations are formed by setting the difference of the quantitative variable of each biochemical entity in two time points equal to the sum of the incoming quantities from all interactions connected to the biochemical entity and subtracting all the outgoing quantities from the biochemical entity to all interactions connected to the biochemical entity in the time interval between the time points of the difference.

Example:

$$V[count]Tr[mRNA]T[t+\Delta t] - V[count]Tr[mRNA]T[t] =$$

$$V[flux]I[X]Tr[mRNA]\bullet\Delta t - V[flux]I[Y]Tr[mRNA] \bullet \Delta t + V[...]... - V[....]...$$

$$V[count]C[RNA]T[t+\Delta t] - V[count]C[RNA]T[t]=$$

$$V[flux]I[Y]C[RNA]\bullet \Delta t - V[flux]I[X]C[RNA]\bullet \Delta t+ V[...]... - V[....]...$$

...

If there are both continuous and discontinuous kinetic laws associated with an interaction that connects a biochemical entity, a difference equation is written from the biochemical entity such that continuous or discontinuous fluxes are added or subtracted depending on the direction of each connection.

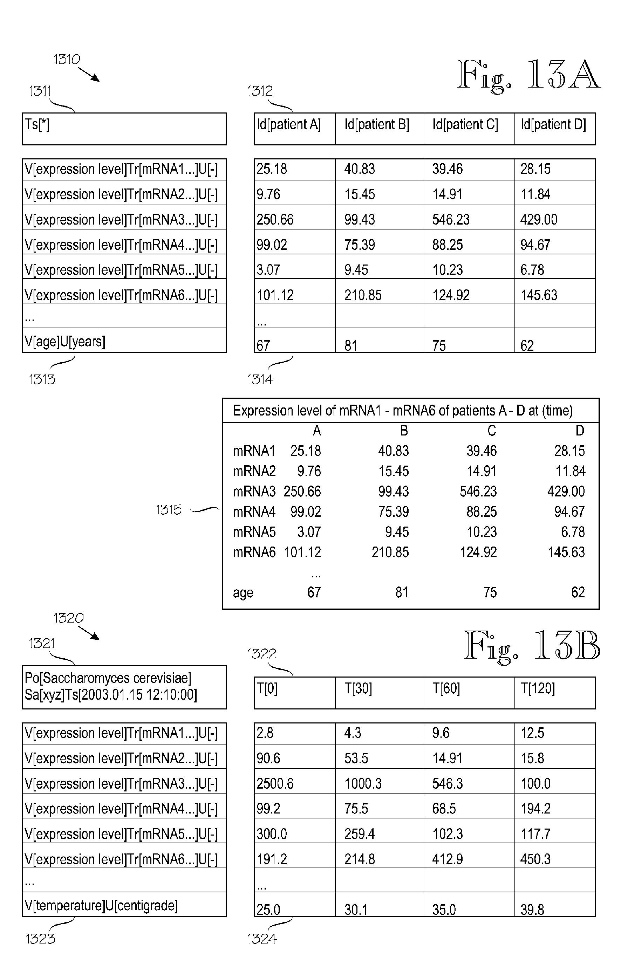

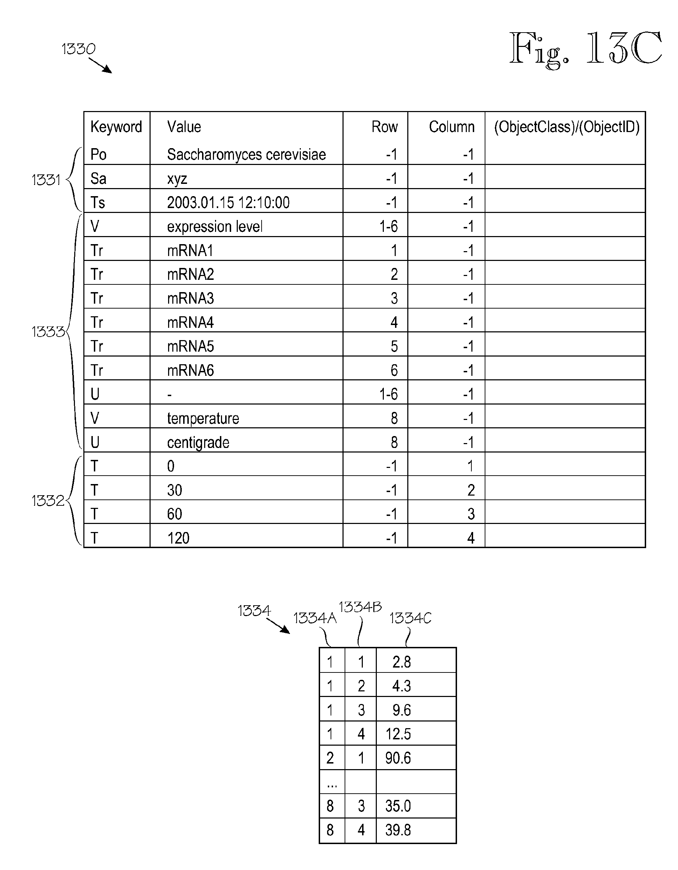

In this way a complete "hybrid" equation system can be generated for simulation purposes with given initial or boundary conditions. Initial conditions and boundary conditions can be represented by data sets that will be described in connection with Figures 13A to 13C.

In the differential and difference equations described above, the biochemical entity-specific fluxes can be replaced by reaction rates multiplied by stoichiometric coefficients.

In a static case, the derivatives and differences are zeros. This leads to a flux balance model with a set of algebraic equations of reaction rate variables (kinetic laws are not needed), wherein the set of algebraic equations describe the feasible set of the reaction rates of specific interactions.

Example:

$$0 = V[rate]I[EC\ 2.7.7.13\_PSA1] + ...$$
$$- V[rate]I[\ EC\ ...\qquad ] - ...$$
$$...$$
$$0 = V[rate]I[EC\ ...\qquad ] + ...$$
$$- V[rate]I[\ EC\ ...\qquad ] - ...$$

**or**

$$0 = V[rate]I[X] - V[rate]I[Y] + V[...]... - V[...]....$$
$$0 = V[rate]I[Y] -V[rate]I[X] + V[...]... - V[...]...$$
$$...$$

Users can provide their objective functions and additional constraints or measurement results that limit the feasible set of solutions.

Yet another preferred feature is the capability to model noise in a flux-balance analysis. We can add artificial noise variables that need to be minimized in the objective function. The noise variables are given in the data sets described above. This helps to tolerate inaccurate measurements with reasonable results.

The model described herein also supports visualization of pathway solutions (active constraints). A general case, the modelling leads to a hybrid equations model where kinetic laws are needed. They can be accumulated in the database in different ways but there may be some default laws that can be used as needed. In general equations, interaction-specific reaction rates are replaced by kinetic laws, such as Michaels-Menten laws, that contain concentrations of enzymes and substrates.

Example:

V[reaction rate]I[EC 2.7.7.13_PSA1] =

5.2*V[concentration]P[PSA1]*V[concentration]C[...] / ( 3.4 + V[concentration]C[...] )

The equations can be converted to the form:

dV[concentration ]C[GDP-D-mannose]/dV[time] =

5.2*V[concentration]P[PSA1]*V[concentration]C[...] / ( 3.4 +

V[concentration]C[...] ) + ...

-7.9*V[concentration]P[ ... ]*V[concentration]C[...]/ ( ... )

...

dV[concentration ]C[water]/dV[time] = 10.0*V[concentration] P[...]*V[concentration]C[...] /(...) + ...

- 8.6*V[concentration ]P[...]*V[concentration]C[...] /(...) - ...

or

V[count]Tr[mRNA]T[t+$\Delta$t] - V[count]Tr[mRNA]T[t] =

(k IF V[count]G[A] > 0 AND V[count]P[B] > 0 and V[count]C[RNA] > 0  ELSE 0) $\bullet \Delta$t

− c3$\bullet$ k2$\bullet$ V[count]Tr[mRNA] $\bullet$ $\Delta$t + V[...]... − V[....]...

V[count]C[RNA]T[t+$\Delta$t]  - V[count]C[RNA]T[t]=

c3$\bullet$ k2$\bullet$ V[count]Tr[mRNA]$\bullet$ $\Delta$t -(k IF V[count]G[A] > 0 AND V[count]P[B] > 0 and V[count]C[RNA] > 0  ELSE 0) $\bullet \Delta$t + V[...]... − V[....]...

There are alternative implementations. For example, instead of the substitution made above, we can calculate kinetic laws separately and substitute the numeric values to specific reaction rates iteratively.

A benefit of such a structured pathway model, in which the pathway elements are associated with interaction data, such as interaction type and/or stoichiometric coefficients and/or location, is that flux rate equations, such as the equations described above, can be generated by an automatic modelling process. This greatly facilitates computer-aided simulation of biochemical pathways. Because each kinetic law has a database relation to an interaction and each interaction relates, via a specific connection, to a biochemical entity, the modelling process can automatically combine all kinetic laws that describe the creation or consumption of a specific biochemical entity and thereby automatically generate flux-balance equations according to the above-described examples.

Another benefit of such a structured pathway model is that hierarchical pathways can be interpreted by computers. For instance, the user interface logic may be able to provide easily understandable visualizations of the hierarchical pathways as will be shown in connection with Figure 8.

Figure 8 shows a visualized form of a pathway, generally denoted by reference numeral 800. A user interface logic draws the visualized pathway 800 based on the elements 612 to 624 shown in Figures 6 and 7A. Circles 810 represent biochemical entities. Boxes 820 represent interactions and edges 830 represent connections. Solid arrows 840 from a biochemical entity to an interaction represent substrate connections where the biochemical entity is consumed by the interaction. Solid arrows 850 from an interaction to a biochemical entity represent product connection where the biochemical entity is produced by the interaction. Dashed arrows 860 represent activations where the biochemical entity is neither consumed nor produced but it enables or accelerates the interaction. Dashed lines with bar terminals 870 represent inhibitions where the biochemical entity is neither consumed nor produced but it inhibits or slows down the interaction. The non-zero stoichiometric coefficients are associated with the substrate or product connections 840, 850. In control connections (eg activation 860 or inhibition 870) the stoichiometric coefficients are zero.

Also, measured or controlled variables can be visualized and localized on relevant biochemical entities. For example, reference numeral 881 denotes the concentration of a biochemical entity, reference numeral 882 denotes the reaction rate of an interaction and reference numeral 883 denotes the flux of a connection.

The precise roles of connections, kinetic laws associated with interactions and the biologically relevant location of each pathway provide improvements over prior art pathway models. For instance, a model as shown in Figures 7A to 8 supports descriptions of varying detail levels by varying the number of elements. Further, the model supports the inclusion of explicit kinetic laws if they are known.

This technique supports graphical representations of measurement results on displayed pathways as well. The measured variables can be correlated to the details of a graphical pathway representation based on the names of the objects.

Note that the data base structure denoted by reference numerals 600 and 700 (Figures 6 and 7A) provide a means for storing the topology of a biochemical pathway but not its visualization 800. The visualization can be generated from the topology, and stored later, as follows. The elements and interconnections of the visualization 800 are directly based in the stored pathways 700. The locations of the displayed elements can be initially selected by a software routine that optimizes some predetermined criterion, such as the number of overlapping connections. Such techniques are known from the field of printed-circuit design. The IMS may provide the user with graphical tools for manually cleaning up the visualization. The placement of each element in the manually-edited version may then be stored in a separate data structure, such as a file.

**Directional connections**

The examples shown in Figures 1A and 1B are directionless, while the connections in biochemical pathways shown in Figures 7A, 7B and 8, are directional. Whether or connections are treated directional, depends on what one is trying to achieve with the visualization mechanism. For example, most electronic signals are inherently directional, but if it suffices to draw schematic diagrams and printed circuit layouts, the connections can be treated as nondirectional. However, while the copper foil of a printed circuit board is nondirectional, storing the direction information relating to the connections may be beneficial in finding out cause-effect relationships. Biochemical connections are typically directional. That is, an activation or inhibition connection is shown as a connection from the activator or inhibitor towards the affected element, as shown in Figure 8.

**Local comprehension in large networks**

Local comprehension is a broad concept combining the various aspects and embodiments of the present invention. Many prior art network visualization systems appear to be based on the assumption that the entire network can be understood, given the proper navigation and display tools. The present invention begins with the assumption that the entire network is or may not be understandable to any single person and, at best, a single person may understand one or more local subnetworks. For instance, assume that the network describes microbiological systems, and a researches is interested in pathways relating to gene P53. The database technology described in connection with Figures 6 and 12 and the variable description language described in connection with Figures 9A to 11 - particularly the explicit location information that is distinct from organism information - provides a systematic way to describe one animal's P53 gene transplanted to another animal. Without explicit and systematic location and organism information, an expression like "Pig_P53" is ambiguous as it is not clear whether the expression means pig's P53 gene in general, pig's P53 gene in a pig, or some other animal's P53 gene in a pig. Because the database structure described in connection with Figure 6 supports any kind of biochemical information in an unambiguous manner, it is possible to model virtually all biochemical knowledge in a single vast database, instead of splitting the knowledge to various sub-databases each of which describes a single individual or organism.

**Data visualization with variable description language**

Figures 9A and 9B illustrate a preferred variable description language, or "VDL". Generally speaking, a variable is anything that has a value and represents the state of a biochemical system (either a real-life biomaterial or a theoretical model). When an IMS is taken into use, the designer does not know what kinds of biomaterials will be encountered or what kinds of experiments will be carried out or what results are obtained from those experiments. Accordingly, variable descriptions have to be open to future extensions. On the other hand, openness and flexibility should not result in anarchy, which is why well-defined rules should be enforced on the variable descriptions. These needs are best served by an extendible variable description language ("VDL").

eXtendible markup language (XML) is one example of an extendible language that could, in principle, be used to describe biochemical variables. XML expressions are rather easily interpretable by computers. However, XML expressions tend to be very long, which makes them poorly readable to humans. Accordingly, there is a need for an extendible VDL that is more compact and more easily readable to humans and computers than XML is.

The idea of an extendible VDL is that the allowable variable expressions are "free but not chaotic". To put this idea more formally, we can say that the IMS should only permit predetermined variables but the set of predetermined variables should be extendible without programming skills. For example, if a syntax check to be performed on the variable expressions is firmly coded in a syntax check routine, any new variable expression requires reprogramming.

An optimal compromise between rigid order and chaos can be implemented by storing permissible variable keywords in a data structure, such as a data table or file, that is modifiable without programming. Normal access grant techniques can be employed to determine which users are authorized to add new permissible variable keywords.

Figure 9A illustrates a variable description in a preferred VDL. A variable description 90 comprises one or more pairs 91 of a keyword and name, separated by delimiters. As shown in the example of Figure 9A, each keyword-name pair 91 consists of a keyword 92, an opening delimiter (such as an opening bracket) 93, a (variable) name 94 and a closing delimiter (such as a closing bracket) 95. For example, "Ts[2002-11-26 18:00:00]" (without the quotes) is an example of a time stamp. If there are multiple keyword-name pairs 91, the pairs can be separated by a separator 96, such as a space character or a suitable preposition. The separator and the second keyword-name pair 91 are drawn with dashed lines because they are optional. The ampersands between the elements 92 to 96 denote string concatenation. That is, the ampersands are not included in a variable description.

As regards the syntax of the language, a variable description may comprise an arbitrary number of keyword-name pairs 91. But an arbitrary combination of pairs 91, such as a concentration of time, may not be semantically meaningful.

Figure 9B shows a table 98 of typical keywords. Next to each entry in table 98 is its plaintext description 98' and an illustrative example 98". Note that the table 98 is stored in the IMS but the remaining tables 98' and 98" are not necessarily stored (they are only intended to clarify the meaning of each keyword in table 98). For example the example for keyword "T" is "T[-2.57E-3]" which is one way of expressing minus 2.57 milliseconds prior to a time reference. The time reference may be indicated by a timestamp keyword "Ts".

The T and Ts keywords implement the relative (stopwatch) time and absolute (calendar) time, respectively. A slight disadvantage of expressing time as a combination of relative and absolute time is that each point of time has a theoretically infinite set of equivalent expressions. For example, "Ts[2002-11-26 18:00:30]" and "Ts[2002-11-26 18:00:00]T[00:00:30]" are equivalent. Accordingly, there is preferably a search logic that processes the expressions of time in a meaningful manner.

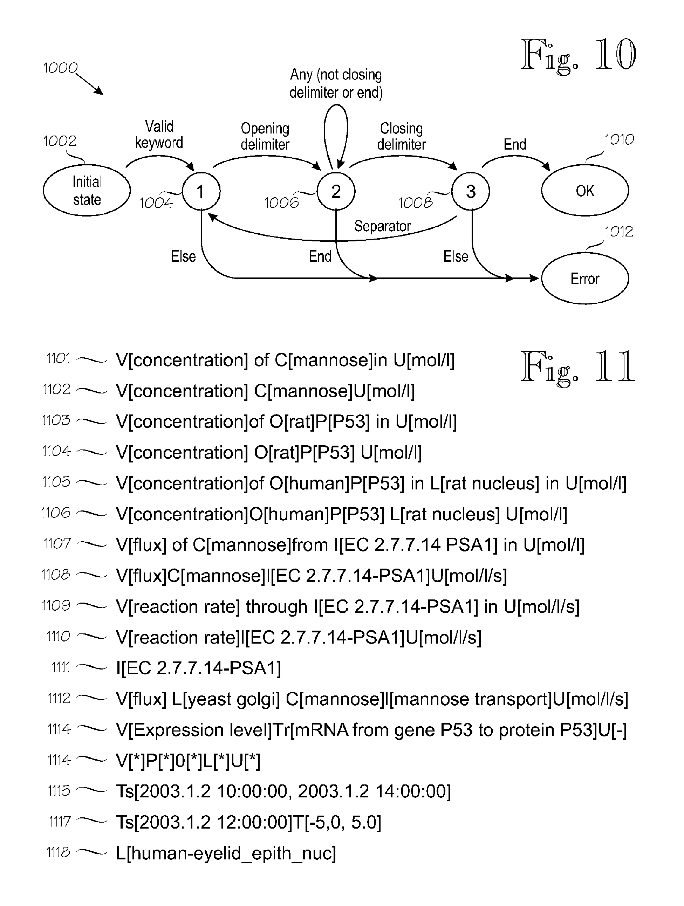

By storing an entry for each permissible keyword in the table 98 within the IMS, it is possible to force an automatic syntax check on variables to be entered, as will be shown in Figure 10.

The syntax of the preferred VDL may be formally expressed as follows:

<variable description>::=<keyword>"["<name>"]"{{separator}<keyword>"["<name>"]"]<end>

<keyword>::=<one of predetermined keywords, see eg table 98>

<name>::=<character string> "*" for any name in a relevant data table

The purpose of explicit delimiters, such as "[" and "]" around the name is to permit the use of any characters within the name, including spaces, but excluding the delimiters, of course.

A preferred set of keywords 98 comprises three kinds of keywords: what, where and when. The "what" keywords, such as variable, unit, biochemical entity, interaction, etc., indicate what was or will be observed. The "where" keywords, such as sample, population, individual, location, etc., indicate where the observation was or will be made. The "when" keywords, such as time or time stamp, indicate the time of the observation.

The following VDL expressions are particularly relevant in connection with biochemical information networks: A[abiotic_stimulus], Cg[category], Cc[cellular_compartment], Ct[cell type], C[compound], F[feature], Fb[feature_ binder], G[gene], Ge[genome], I[interaction], M[macromolecular_complex], Or[organ], O[organism], P[protein], Po[population], Pw[pathway], Re[reagent], Te[tissue], Tr[transcript] and V[variable].

Figure 10 illustrates an optional process for automatic syntax checking. A benefit of a formal VDL is that it supports an automatic syntax check. Figure 10 illustrates a state machine 1000 for performing such a syntax check. State machines can be implemented as computer routines. From an initial state 1002 a valid keyword causes a transition to a first intermediate state 1004. Anything else causes a transition to an error state 1012. From the first intermediate state 1004, an opening delimiter causes a transition to a second intermediate state 1006. Anything else causes a transition to the error state 1012.

After the opening delimiter, any characters except a closing delimiter are accepted as parts of the name, and the state machine remains in the second intermediate state 1006. Only a premature ending of the variable expression causes a transition to an error state 1012. A closing delimiter causes a transition to a third intermediate state 1008, in which one keyword/name pair has been validly detected. A valid separator character causes a return to the first intermediate state 1004. Detecting the end of the variable expression causes a transition to "OK" state 1010 in which the variable expression is deemed syntactically correct.

Figure 11 shows examples of compound variable expressions in the VDL. Compound variable expressions are expressions with multiple key-word/name pairs. Note how variables get more specific when qualifiers are added. Reference signs 1101 to 1110 denote five pairs of equivalent expressions such that the first expression of each pair is longer or more verbose and the second is more compact. For a computer, the verbose and compact expressions are equal, but human readers may find the verbose form easier to understand. By referencing table 108, the expressions in Figure 11 are self-explanatory. For example, expressions 1109 and 1110 define reaction rate through interaction EC 2.7.7.13-PSA1 in moles per litre per second. Reference sign 1114 denotes a wildcard expression "V[*]P[*]0[*]U[*]" which means any variable of any protein of any organism in any units. Reference signs 1115 and 1116 denote two different variable expression for two different expressions of time. Variable expression 1115 defines a three-hour time interval and variable expression 1117 defines a 10-second time interval (beginning five seconds before and ending five seconds after the timestamp). Variable expression 1118 is an expression of a hierarchical location expression. As shown in Figure 6, the location information is preferably hierarchical and comprises database relations to organism 614-1, organ 614-2, tissue 614-3, cell type 614-4, cellular compartment 614-5 and/or spatial point 614-6, as appropriate. Variable expression 1118 ("L[human_eyelid_epith_nuc]") is a visualized expression of such a multi-level hierarchical location information. Its organism relation 614-1 indicates a human, its organ relation 614-2 indicates eyelid, its cell type relation 614-4 indicates epithelial cell and its cellular compartment relation 614-5 indicates cell nucleus. In this example, the multi-level hierarchical location does not indicate any specific tissue or spatial point within the cell or cellular compartment.

Note that regardless of the language of humans using the IMS, it is beneficial to agree on one language for the variable expressions. Alternatively, the IMS may comprise a translation system to translate the variable expressions to various human languages.

The VDL substantially as described above is well-defined because only expressions that pass the syntax check shown in Figure 10 are accepted. The VDL is open because the permissible keywords are stored in table 108 which is extendible. The VDL is compact because substantially the minimum number of letters or characters are used for the keywords. The most common keywords are comprised of a single letter, or two letters if a one-letter keyword is ambiguous. Another reason for the compactness of the VDL described herein is that it does not use keywords in pairs of opening keyword - closing keyword, such as "<ListOfProteins> ... </ListOfProteins>", which is typical of XML and its variants. Yet another characteristic feature of the VDL described herein is that the keywords are not separated by paragraph (new line) characters, which is why most expressions require much less than a single line in a document or on a computer display. Actually, the inventive VDL does not require any separator characters (only closing delimiters, such as "]"), but separator characters, such as spaces or prepositions, may be used to enhance readability to humans.

## Biomaterial descriptions

Figure 12 shows an example of an object-based implementation of the biomaterials section of the IMS. Note that this is but one example, and many biomaterials can be adequately described without all elements shown in Figure 12. The biomaterial section 610, along with its sub-elements 610-1 to 610-4, and the location section 614 with its sub-elements 614-1 to 614-5 have been briefly described in connection with Figure 6. In addition to the previously-described elements, Figure 12 shows that a biomaterial 610 may have a many-to-many relation to a condition element 1202, a phenotype element 1204 and to a data entity element 1206. An optional organism binder 1208 can be used to combine (mix) different organism. For example, the organism binder 1208 may indicate that a certain population comprises x per cent of organism 1 and y per cent of organism 2.

A loop 1210 under the organism element 614-1 means that the organism is preferably described in a taxonomical description. The bottom half of Figure 12 shows two examples of such taxonomical descriptions. Example 1210A is a taxonomical description of a specific sample of coli bacteria. Example 1210B is a taxonomical description of white clover.

The variable description language described in connection with Figures 9A to 11 can be used to describe variables relating to such biomaterials and/or their locations. Example:

$$V[concentration]P[P53]U[mol/l]Id[Patient\ X]L[human\ cytoplasm]=0.01.$$

A benefit of this kind of location information is an improved and systematic way to compare locations of samples and locations of theoretical constructs like pathways that need to be verified by relevant measurement results.

Another advantage gained by storing the biomaterials section substantially as shown in Figure 12 relates to visualization of data. For example, biomaterials can be replaced with their phenotypes. An example of such replacement is that certain individuals are classified as "allergic", which is far more intuitive to humans than a mere identification.

**Data sets**

The following description relates to preferred embodiments that support advantageous data visualization techniques Before describing the data visualization techniques, preferred techniques for storing data sets will first be described. Figures 13A to 13C illustrate data sets according to various preferred embodiments of the invention. Both wet-lab and in-silico experiment types are preferably stored as data sets of similar construction. By storing data related to wet-lab and in-silico experiments in similarly constructed data sets, it is possible to use output data from a wet-lab experiment as input data to an in-silico experiment, for example, without any intervening data format conversions. In Figure 13A, an exemplary data set 1310 describes expression levels of a number of mRNA molecules (mRNA1 through mRNA6 are shown). Data set 1310 is an example of a data set stored in the data set section 202 shown in Figure 2. The data set 1310 comprises four matrixes 1311 through 1314. A variable value matrix 1314 describes the values of the variables values in a row-column organization. A row description list 1313 specifies the meaning of the rows of the variable value matrix. A column description list 1312 specifies the meaning of the columns of the variable value matrix. Finally, a fixed dimension description 1311 specifies one or more fixed dimensions that are common to all values in the variable value matrix 1314. Note that the variable value matrix 1314 is comprised of scalar numbers. The remaining matrixes 1310 to 1313 use the VDL to specify the meaning of their contents.

Figure 13A also shows a human-readable version 1315 of the data set 1310. Note that the human-readable version 1315 of the data set is only shown for better understanding of this embodiment. The human-readable version 1315 is not necessarily stored anywhere, and can be created from the data set 1310 automatically whenever a need to do so arises. The human-readable version 1315 is an example of data sets, such as spreadsheet files, that are typically stored in prior art IMS systems for biochemical research. The IMS preferably contains a user interface logic for automatic two-way conversion between the storage format 1311 - 1314 and the human-readable version 1315.

Figure 13B shows another data set 1320. The data set 1320 also specifies expression levels of six mRNA molecules, but these are not expression levels of different individuals but of a single population at four different times. In the data set 1320, the fixed dimension description 1321 specifies that the data relates to sample xyz of a certain yeast at a certain date and time. The column description list 1322 specifies that the columns specify data for four instances of time, namely 0, 30, 60 and 120 seconds after the time stamp in the fixed dimension description 1321. The row description list 1323 is very similar to the corresponding list 1313 in the previous example, the only difference being that the last row indicates temperature instead of patient's age. The variable value matrix 1324 contains the actual numerical values.

The division of each data set (eg data set 1310) to four different components (the matrixes 1311 to 1314) can be implemented so that each matrix 1311 to 1314 is a separately addressable data structure, such as a file in the computer's file system. Alternatively, the variable value matrix can be stored in a single addressable data structure, while the remaining three matrixes (the fixed dimension description and the row/column descriptors) can be stored in a second data structure, such as a single file with headings "common", "rows" and "column". A key element here is the fact that the variable value matrix is stored in a separate data structure because it is the component of the data set that holds the actual numerical values. If the numerical values are stored in a separately addressable data structure, such as a file or table, it can be easily processed by various data processing applications, such as data mining or the like. Another benefit is that the individual data elements that make up the various matrixes need not be processed by SQL queries. An SQL query only retrieves an address or other identifier of a data set but not the individual data elements, such as the numbers and descriptions within the matrixes 1311 to 1314.

Figure 13C shows an alternate implementation of the data sets. This implementation is particularly advantageous with sparse data or if there are redundant variable descriptions that can be stored efficiently by storing each data item only once in an appropriate data table. The example shown in Figure 13C stores precisely the same data that was shown in Figure 13B, but in a different organization. A variable value matrix 1334 is a 3*n matrix, wherein n is the number of actual data items. The data items are stored in column 1334C, which comprises precisely the same data as the variable value matrix 1322 of Figure 13B (although some elements are hidden, as indicated by the ellipsis). In addition to column 1334C, the variable value matrix 1334 comprises a row indicator column 1334A and a column indicator column 1334B, which indicate the row and column which the corresponding data item belongs to. The variable value matrix 1334 is particularly advantageous when data is very sparse, because null entries need not be stored. On the other hand, the variable value matrix 1334 requires explicit row and column indicators.

In the example of Figure 13C, the significance of the data, ie, the row/column descriptors and the common descriptors are stored in a matrix or table 1330, that has entries for keyword, value, row and column. Section 1331 of the matrix 1330 corresponds to the fixed dimension description 1321 shown in Figure 13B. The three elements in the fixed dimension description 1321, ie, population, sample and time stamp, are stored as separate rows in section 1331 of matrix 1330. For instance, the first row has an entry of "Po" (=population) for the keyword, "Saccharomyces cerevisiae" for the corresponding value, and "-1" for each of the row and column. In this example, "-1" is a special value which is valid for all rows or column. As the section 1331 is valid for all rows and columns, its contents correspond to the fixed dimension description 1321 shown in Figure 13B. Section 1333 corresponds to the row description 1323 of Figure 13B. In section 1333, the column indicators are "-1", which means "any column". The first line of section 1333 means that the keyword "V" (=variable) and its value ("expression level") are valid for rows 1 to 6. The next six lines are six different row descriptors for rows 1 to 6, and so on. Finally, section 1332 correspond to the column description 1322 in Figure 13B. Here, the rows are all "-1", since the column descriptors are valid for all rows.

The matrixes 1330 and 1334 shown in Figure 13C comprise precisely the same information as the common and row/column descriptors 1321 to 1323 in Figure 13B, as far as human readers are concerned. But interpretation of data by computers can be facilitated by storing separate entries for object class and object identifier. This feature eliminates some extra processing steps, such as data look-up via a keyword table 98 shown in Figure 9B.

### Data set selection and visualization

Figure 14 shows how a matrix, such as one of the data sets described in connection with figures 13A to 13C, can serve as a basis for the user's navigation input. Figure 14 shows the data set 1310 shown in Figure 13A and two sliders or markers 1402 and 1404, that select, respectively, a row and a column of the matrix. In this example the user's row selection 1402 indicates the expression level of mRNA6, and the column selection 1404 indicates patient B. This information may be used as the navigation input NI in a system as shown in Figure 2. The navigation input NI may be applied to the retrieval engine RE for selecting a new subnetwork for visualizing. Or, if the cache CA is implemented, the navigation input NI may be applied to the cache CA that returns the requested information without triggering a new database query.

Figure 14 shows only one row sliders 1402 and column slider 1404, but sliders with user-adjustable width can be used to select row or column ranges, or multiple sliders can be used for selecting multiple disconnected rows or columns.

A numerical parameter indicator 524 was briefly described in connection with Figure 5. Figure 15 shows an enhanced embodiment in which an icon 1510 of a node is provided with a more informative numerical parameter indicator 1520. The numerical parameter indicator 1520 preferably comprises a graphical indicator 1522, such as a bar graph or pie slice and a numerical scale 1524. The upper end of the scale typically extends to the maximum value in the relevant data set, rounded up to a convenient round number. The lower end of the scale is either zero or the minimum value in the relevant data set, rounded down to a convenient round number.

In order to conserve display space, it is possible to provide the majority of nodes with a minimized numerical parameter indicator. For example, a small indicator may use different colours to indicate one of a few number bins (eg 100 - 200, 200 - 300, 300 - 400 or 400 - 500). Only focus nodes and/or nodes in the vicinity of a pointer indicator (eg a mouse cursor) are shown with full numerical parameter indicators 1520, including the numerical scales.

As an alternative, the numerical parameter indicator next to a node icon 1510 can show the difference between a numerical parameter of corresponding nodes in two different networks. For example, the numerical the node may represent a biochemical location, the numerical parameter may be the concentration of some biomaterial and the two networks may represent to different biomaterial samples, such as two different individuals.

Reference numeral 1530 denotes a numerical parameter indicator that indicates several numerical parameters simultaneously. For example, the five numerical parameters shown here may represent the concentration of some biomaterial in five different samples. Or, they may represent the same variable measured at five different instances or time. Reference numeral 1540 denotes a numerical parameter indicator that indicates numerical parameter versus time.

In a particularly useful arrangement, one of the sliders 1402, 1404 in Figure 14 indicates the time stamp of an observation, and in response to a selection of time by the user, the network editor displays the relevant numerical parameter(s) observed at that time next to the displayed nodes. In another particularly useful arrangement one of the sliders is used to navigate to a node 1510 indicating a biochemical entity, such as the expression level of mRNA6 as indicated by slider 1402, and the other slider is used interactively to animate the numerical parameter indicators 1520, 1530, 1540. The animation means that the numerical parameter indicator(s) is/are recreated dynamically in response to a slider movement by the user. Such animation is a convenient way to show parameters of several samples or individuals, show observations made at different times, etc.

### Pattern matching

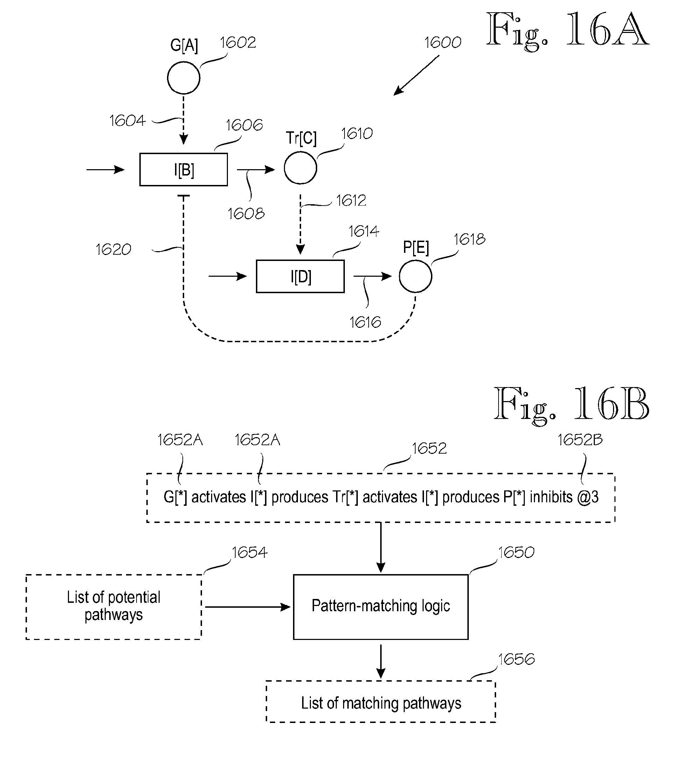

Figures 16A to 16C illustrate a technique for searching pathways that match a given pattern. According to a further preferred embodiment of the invention, the network editor comprises a pattern-matching logic that is able to search for topological patterns (pathway motifs). In pattern matching the search criteria are relaxed and searches can be based on wildcards or gene ontologies, for example.

Figure 16A illustrates an exemplary pathway that is a typical candidate for pattern matching. Figure 16A uses the same drawing notation as Figure 8. Reference numeral 1600 generally denotes a pathway that models self-inhibition, ie, a process in which a gene's expression is regulated by a product (protein) encoded by that gene. Pathway model 1600 models such a regulatory process as follows. Gene A 1602 has an "activates" 1604 relation to interaction B 1606. Interaction B 1606 has a "produces" relation 1608 to transcript C 1610, which in turn has an "activates" relation 1612 to interaction D 1614. Interaction D 1614 has a "produces" relation 1616 to protein E 1618, which closes causes the self-regulation by way of an "inhibits" relation 1620 to interaction B 1606.

Figure 16B generally illustrates a pattern-matching logic 1650. Suppose that a researcher wishes to search the IMS for such self-regulation mechanisms. In order to support such searches, the IMS preferably comprises a pattern-matching logic 1650 that is arranged to carry out a wildcard search based on search criterion 1652 that may comprise wildcards. In this example, the search criterion 1652 is as follows:

G[*] activates I[*] produces Tr[*] activates I[*] produces P[*] inhibits @3

This example comprises two special symbols. The asterisks "*", denoted by reference signs 1652A, are wildcard expressions that match any character string. Such wildcard characters are will known in the field of information technology, but the use of such wildcard characters is only possible by virtue of the systematic way of storing biochemical information. The last term "@3", denoted by reference sign 1652B, is another special character and means the third term in the search criterion 1652, ie, the interaction I[*], which is activated (=second term) by any gene G[*] (=first term). The fact that the pattern-matching logic 1650 can process special terms like "@3" 1652B that refer to a previous term in the search criterion 1652, enables the pattern-matching logic 1650 to retrieve pathways that contain loops.

In addition to the search criterion 1652 that may comprise wildcards, the pattern-matching logic 1650 may have another input 1654 that indicates a list of potential pathways. The list may be an explicit list of specific pathways, or it may be an implicit list expressed as further search criteria based on elements of the pathway model (for potential search criteria, see Figures 7A to 8). As its output, the pattern-matching logic 1650 produces a list 1656 of pathways that match the search criterion 1652.

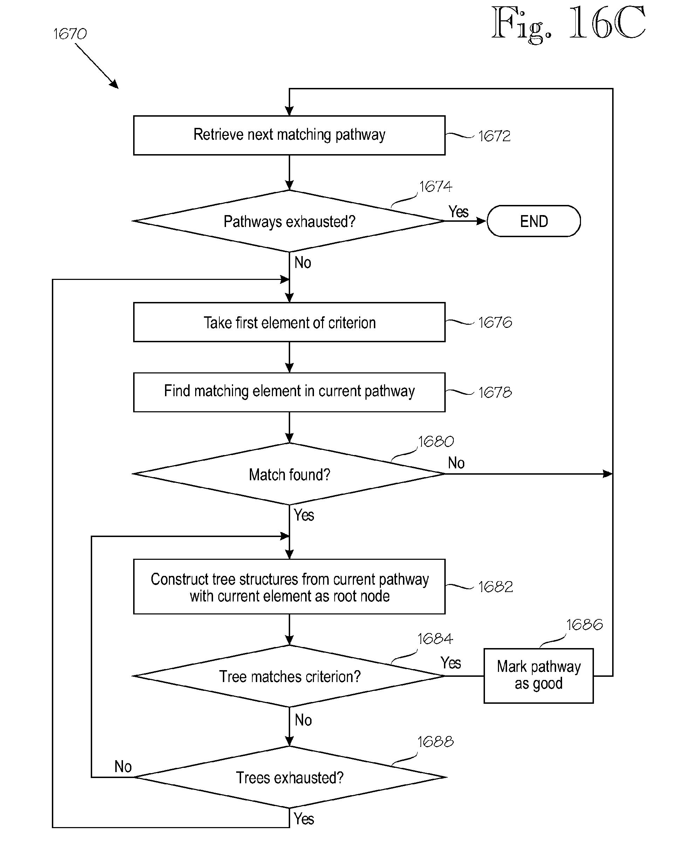

For example, the pattern-matching logic 1650 can be implemented as a recursive tree-search algorithm 1670 as shown in Figure 16C. Step 1672 launches a database query that returns a list of pathways 1654 that matches the researcher's query parameters. For example, the query parameters may relate to the location 614, which is shown in more detail in Figure 6 and 12, such that the location indicates a human liver. In step 1674, if no more matching pathways are found, the process ends. When a pathway is taken under study, the first element of the search criterion 1652 is selected in step 1676. In step 1678 a search is made in the current pathway for the next element that matches the first element of the search criterion. In step 1680, if the current pathway has no more elements that match the first element of criterion, the next pathway will be tried. In step 1682 tree structures are recursively constructed from the current pathway, taking the current element as the root node of the tree structure. In step 1684 it is tested whether the currently-tested tree structure matches the search criterion 1652. If yes, the current pathway is marked as a good one in step 1686. For example, the current pathway may be copied to the list of matching pathways 1656. If the current tree structure does not match the search criterion 1652, a test is made in step 1688 as to whether all tree structures from the current pathway element have been tried. If not, the process returns to step 1682, in which the next tree structure is constructed. If all tree structures from the current pathway element have been tried, the process returns to steps 1676 - 1678, in which the first element of the search criterion 1652 is again taken and another matching pathway element is tried as a root node for constructing candidates for matching tree structures, and so on.

As regards realization of step 1682, in which tree structures are constructed from the pathway under test, tree-search algorithms are disclosed in programming literature. In a normal tree-search algorithm, loops are normally not allowed, but in step 1682 a loop is allowed if that loop matches a loop in the search criterion 1652.

The example shown in Figure 16B is based on textual wildcards. An even more capable system is achieved with ontology databases. This means that in step 1682 of Figure 16C, the matching test is based on an ontology query instead of a wildcard match.

In the embodiment shown in Figures 16B and 16C, the search criterion (pathway pattern) was expressed in text form. It is also possible to enter a pathway pattern to be searched in the same way as pathways are generally entered into the IMS. Figure 16A shows an example of a conventional pathway 1600, although in a real-life situation, the identifiers A through E will be replaced by actual identifiers of biochemical entities. Figure 16D shows a pathway pattern (motif) 1660 that is structurally identical to the pathway 1600, but wildcards are substituted for some or all of the identifiers of biochemical entities. In this example, an identifier to the pathway pattern (motif) 1660 can be entered to the pattern-matching logic 1650 instead of the textual search criterion 1652.

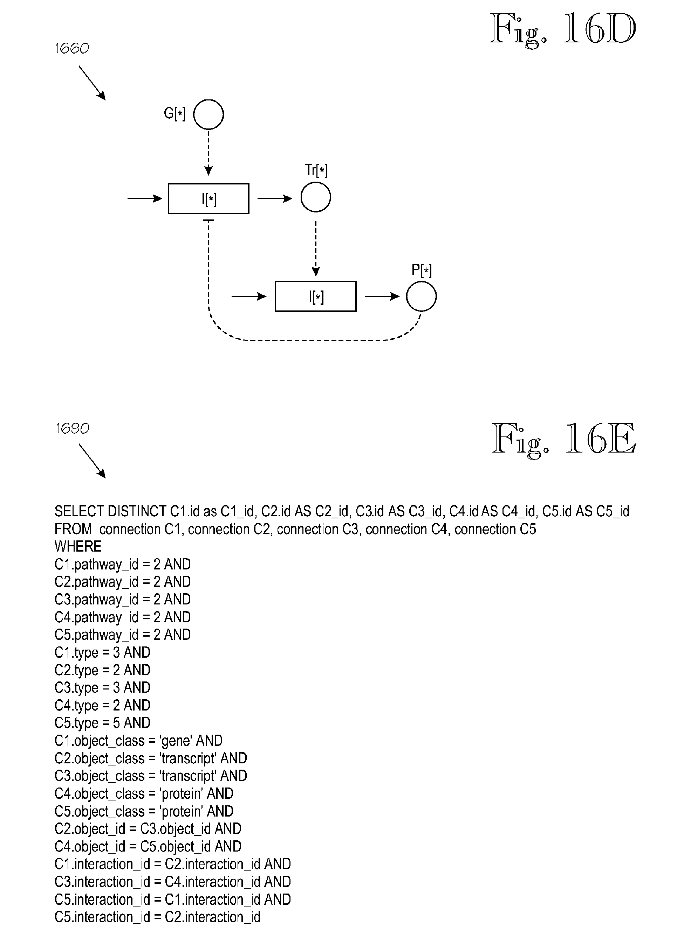

Figure 16E shows an exemplary SQL query 1690 for retrieving pathways that match the pathway pattern 1660. In this example the search criteria have been generated such that pathway_id=2 corresponds to pathway Pw [...]L[...]. The contents of the SQL query 1690 can be interpreted as follows. The SELECT sentence retrieves five id fields for values of variables C1_id through C5_id. The FROM clause specifies that the query is to retrieve from the connection table those connections whose id fields were requested in the SE-LECT sentence. The WHERE clause specifies the following conditions:

- All connections must have pathway_id=2 (id for the pathway pattern);
- Connection C1 is of type 3 (CONTROL);
- Connection C2 is of type 3 (PRODUCT);
- Connection C3 is of type 3 (CONTROL);
- Connection C4 is of type 3 (PRODUCT);
- Connection C5 is of type 3 (INHIBITION).

The object classes of the connections (gene, transcript, ...) are as follows:

- Connections C1 and C3 have a common entity, so do C4 and C5;
- Connections C1 and C2 have a common interaction;
- Connections C3 and C4 have a common interaction;
- Connections C5 and C1 have a common interaction;
- Connections C5 and C2 have a common interaction.

When the query 1690 is processed, its result set indicates the pathways that meet the above criteria. In the retrieved pathways the pattern (motif) 1660 is easy to localize as soon as the five connections have been identified by means of their id fields.

Generation of the search criteria contains the following steps:

1. read connections of the pathway pattern (motif to search for);
2. based on their number, generate the SELECT sentence and FROM clause;
3. form the conditions of the WHERE clause based on the pathway pattern;
4. form the conditions for the types of the connections;
5. form the conditions for the object classes of the connections;
6. form the identity conditions for the biochemical entities joining the connections;
7. form the identity conditions for the interactions joining the connections.

If some of the entities in the pathway motif have been identified by a name of its own or by a GO class, the generation of the SQL query involves further conditions, wherein the name of the entity or the GO class connected by the annotation restricts entries to the result set.

Such a topological pattern matching by relatively simple database queries is greatly facilitated by the systematic pathway model described in connection with Figures 7A to 8 and the systematic variable description language described in connection with Figures 9A to 11.

**Visualization of differences between networks (pathways)**

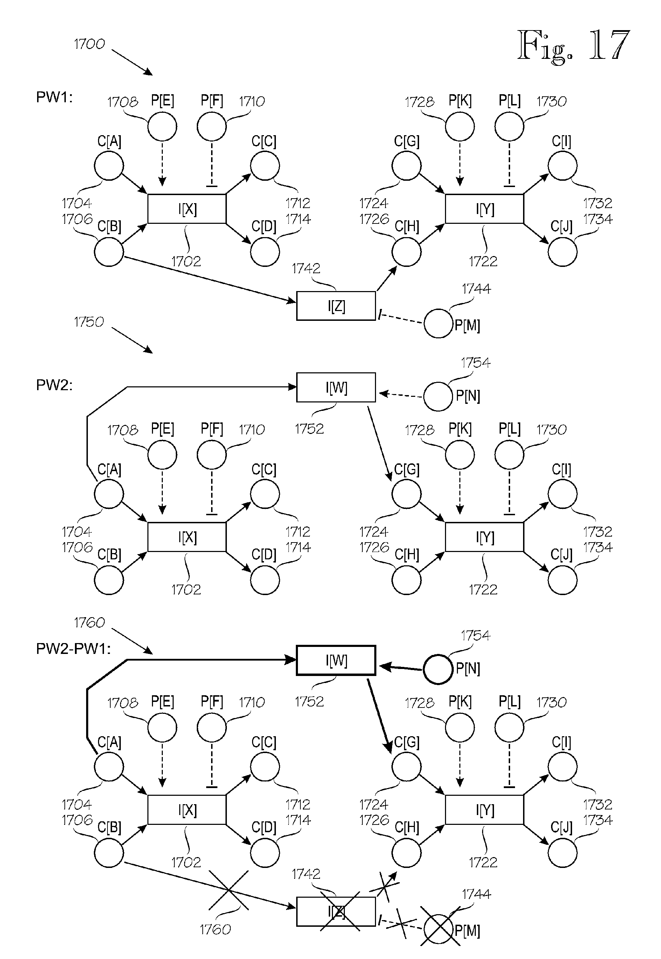

Figure 17 illustrates visualization of differences between two different subnetworks (biochemical pathways in this example). The description of the pattern-matching technique described above shows how computers can be made to process networks described in a systematic variable description language. Such techniques can be adapted to show differences between two network topologies. Reference numeral 1700 generally denotes a first pathway "PW1", and reference numeral 1750 denotes a second pathway "PW2". Elements 1702 to 1734 are identical in both pathways. Elements 1742 and 1744, and the connections to/from these elements, are only present in the first pathway 1700. Elements 1752 and 1754, and the connections to/from these elements, are only present in the second pathway 1750.

Reference numeral 1760 generally denotes a difference between the second and first pathways 1750, 1700. In this example, elements 1752 and 1754 and the connections to/from these elements, which are only present in the second pathway 1750, are shown with bold lines. Elements 1742 and 1744 and the connections to/from these elements, which are not present in the second pathway 1750, are struck over with cross signs 1760. In a colour display, different colours would typically be used to indicate added and deleted elements.

If the two networks to be compared are stored in separate files or databases, identifying them for comparison is trivial. But in many cases the networks to be compared are subnetworks of a larger network, and the user must begin by identifying the subnetworks to be compared. This may be done by using any database selection tools and filter and rule settings to display the subnetworks one at a time. Each subnetwork is then associated with an identifier. The differentiation logic retrieves the identified subnetworks, one being a "from" subnetwork (pathway 1 in the above example) and the other being a "to" subnetwork (pathway 2). Each element that is only present in the "from" subnetwork is shown as deleted and each element that is only present in the "to" subnetwork is shown highlighted. The differentiation is based only on network topology (and, optionally, on associated annotation) but not on layout coordinates.

Instead of marking the differences between two subnetworks, or in addition to it, the differentiation algorithm may compute a measure of homology between the two subnetworks. Homology may be defined as a ratio of common elements (nodes and connections) to the total number of elements, such that two identical networks have a mutual homology of one and two networks with nothing in common have a mutual homology of zero. For instance, the networks PW1 and PW2 are comprised of 18 nodes and 18 connections. They have 14 common nodes and 12 common connections, whereby they have a homology of (14+12)/(18+18) = 0.72.

## Layout, navigation and display techniques

As described under the subheading of "local comprehension", not only are some networks too large to display on a single screen, but they may be too large and complex for any single person to understand. Therefore a typical network visualization process begins with node selection based on database queries. For instance, a user may select nodes that relate to particular gene in a particular organism. Such an initial selection is best performed as a database query. The resulting subnetwork is displayed for the user. The user may then use the rule set RS and filter settings FS (Figure 2) to clarify the representation of the displayed subnetwork, by omitting irrelevant or self-evident information.

In addition to the database queries, rules and filter settings, the user may enter a navigation input by means of the keyboard and/or graphical pointing device, such as a mouse or joystick. The navigation input may cause a zoom and/or pan operation, which require a display regeneration. In some cases the navigation input only results in a change of the focus node(s). In other words, the display is not re-drawn and only a set of different nodes is highlighted, each highlighted node being a focus node.

As stated briefly in connection with Figure 2, some of the problems of the prior art systems are caused by the fact that the layout generator LG is o b-tained from a different source than the remainder of the system, whereby the layout generator is not fully controllable by the overall system designer. If the overall system designer has complete control over the layout generator LG, some preferred features are possible. For instance, the concept of explicit non-displayed indicators 15 was briefly mentioned in connection with Figure 1B. This means that if a user's pan or zoom operation results in a node changing from displayed to non-displayed, that node's neighbours should be provided with non-displayed neighbour indicators, instead of extending the connections to the edge of the display.

It should be noted that the explicit non-displayed neighbour indicators are not only needed for distant neighbour nodes, ie, nodes beyond n hops from current focus node(s). Figure 5 described an embodiment in which it is possible to suppress nodes with a very small or very large number of connections, and connections via such nodes. The user is preferably given an option to choose whether nodes suppressed for such reasons should be indicated by non-displayed neighbour indicators.

Another preferred feature obtained by close integration between the layout generator and the rest of the system is optional user-activated screen regeneration. Assume that some user input changes some nodes from displayed to non-displayed of vice versa. When the layout generator re-draws the updated subnetwork, it may completely re-arrange the positions of the nodes, as a result of some optimization algorithm. It will then take the user a considerable amount of time to re-orientate him/herself with the new display layout. Accordingly, it is advantageous to allow the layout generator LG to maintain a previously displayed layout as long as possible, even if changing the number of displayed nodes results in the current subnetwork being non-optimal. The user may request regeneration of the layout at a suitable moment.

Some network connections correspond to cause-effect relations. With such networks it is beneficial to implement a display and navigation logic based on a principal direction of propagation, such as from top to bottom, and all cause-effect relations propagate in that direction. Because network nodes may have multiple upstream and/or downstream neighbours, it is not possible to display all cause-effect relationships precisely vertically, and it is better to say that all cause-effect relationships have a gradient in the direction of propagation. An alternative way to express this idea is that the cause of a cause-effect relation (or a parent of a parent-child relation) precedes the effect (child), as seen in the direction of propagation. In complex networks and/or with loops this means that some nodes may have mutually conflicting coordinate requirements, because one rule places node A above node B while another rule places node A below node B. Somewhat counter-intuitively, such nodes must be displayed by two ore more separate icons (at different locations), in order to preserve the layout dictated by cause-effect relations.

Figures 18A to 18D illustrate advantageous embodiments for navigation and layout techniques. In this discussion, a parent-child relation is used synonymously with cause-effect relations. Figure 18A shows a first step in a multi-step navigation and layout process. Reference numeral 1800 generally denotes a subnetwork displayed on a display device. Rectangles, eg 1802, and circles, eg 1804, in general represent two types of nodes. Nodes 1806, 1808 associated with substantially fixed-length line segments represent nodes that have non-displayed neighbours, see item 15 in Figure 1B. In connection with Figures 18A to 18B, such nodes are also called border nodes for brevity's sake.

The term "border node" does not necessarily mean that the node lies at the physical border of the display area or some cut-out template. Rather the border nodes are located at the topological border of the displayed subnetwork. In other words, the border nodes are at a predetermined depth (number of hops) from some focus node. Node 1820 with a black fill is an example of a focus node. Each focus node is a node selected by the user with some selection mechanism, such as a database query or a point-and-click operation. Circle 1850 with a thick outline is a navigation focus which the user can move with an input device, such as a mouse or the set of arrow keys. The movement of the mouse or other input device is indicated by a mouse cursor 1852.

The displayed subnetwork 1800 is shown superimposed on a grid 1854, shown here with dashed lines. Figure 18A shows an advantageous feature, according to which nodes are displayed up to a first predetermined depth from each focus node. In this example the first depth is four, which means that children and parents of the focus nodes up to fourth generation are displayed. Another advantageous feature is the fact that child-parent relations starting from focus nodes directly correspond to grid levels. In this example, in which the principal direction of cause-effect relations, denoted by reference numeral 1856, is downwards, each node's parent nodes are on the next higher grid line and its child nodes are on the next lower grid line. For instance, node 1814 is a parent of node 1820, which in turn is a parent of nodes 1822 and 1824. Yet another advantageous feature is the fact is that children of parents/grandparents and parents of children/grandchildren are displayed to a second predetermined depth, which in this example is one. For instance, node 1824 is a child (downstream node) of node 1820. Node 1826 is another parent (upstream node) of node 1824. Node 1826 is only two hops (one down, one up) from the focus node 1820, but no parents of node 1826 are displayed, although the first predetermined depth (four) has not been reached. Upstream from the focus node 1820 the situation is analogous. Node 1814 is a parent of the focus node 1820, and other children of node 1814 - here only node 1806 - are displayed only to a depth of one. Nodes that are neither children nor parents (to the first depth) but are at one hop (the second depth) in the opposite direction, such as nodes 1806 and 1826, are displayed between grid levels. In this discussion, one grid spacing is defined as a parent-child separation of one generation.

Figures 18B to 18D show in a step-by-step fashion what happens when the user enters a navigation input that changes focus from node 1820 to node 1814. If the navigation input is entered with the mouse, the user may click the mouse cursor 1852 over node 1814.

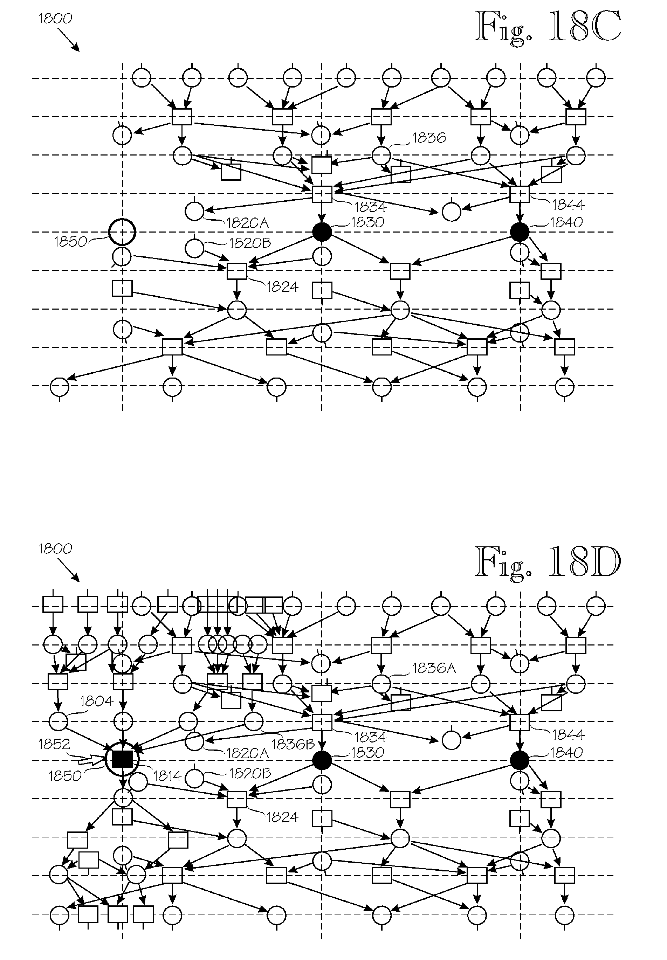

Figures 18B and 18C show intermediate steps and Figure 18D shows the final display. The intermediate steps are not necessarily displayed to the user. Figure 18B shows the subnetwork 1800 after deletion of nodes and connections that existed only because of their relation to the previous focus node 1820. Figure 18C shows splitting of the previous focus node 1820 into displayed nodes 1820A and 1820B. Node 1820 is no longer a focus node but it should be displayed as a child of a parent 1834 of another focus node1830. It should also be displayed as a parent of a child 1824 of the other focus node1830. But in this embodiment only parents and children (up to the first depth) are displayed on the grid levels, and parents and children in the opposite direction are displayed between grid levels. Therefore node 1820 is shown as two nodes 1820A and 1820B, the former being above and the latter below the level of focus nodes.

Figure 18D shows the final display after insertion of nodes and connections that exist because of their relation to the new focus node 1814. In addition to the splitting of the previous focus node, as shown in Figure 18C, Figure 18D shows more examples of node-splitting. For instance, node 1836 is a grandparent of the rightmost focus node 1840. It is also a parent of the current leftmost focus node 1814. Because all focus nodes are preferably kept on the same row and one generation up- or downwards corresponds to one row spacing, node 1836 should be located on two different rows simultaneously. This is done by splitting node 1836 into displayed nodes 1836A and 1836B. In a similar fashion, many of the nodes displayed in Figure 18D are actually displayed twice, which result in an increase of displayed nodes but a decrease of long connections. This embodiment improves supports the concept of "local comprehension" in that the user can more easily comprehend up- and downward relations (parents and children up to $n^{th}$ generation).

As the intermediate steps shown in Figures 18B and 18C are hidden from the user's view, Figure 18D shows the first display change since the situation in Figure 18A. In this example, the left-hand side of the display is cluttered. This is because it is beneficial to re-optimize the display layout only in response to some user command, such as "rearrange". By keeping as much of the previous display layout, the user can easily orientate him/herself to the updated display of Figure 18D, even if some parts of the display are rather cluttered.

In the following, a generic layout generation algorithm will be described. The user has specified a number of focus nodes. This number may result from the user's explicit selection of focus nodes, or the retrieval engine may return that number of focus elements in response to the user's query. A column (vertical line) is assigned to each focus node. Unity-spaced rows (horizontal lines) are assigned to parents and children, up to a first depth (eg four), of the focus nodes. The middle row is initially reserved for the focus nodes, which are spaced evenly on that row. If the user is particularly interested in, say, the parents, of a focus node, (s)he may later deviate from the assumption that focus nodes are located on the middle row and specify that the focus nodes are displayed on a row below the middle row. There would then be a separate first predetermined depth in either direction.

The parents and children of the focus nodes are then spaced more or less evenly on the rows above and below, respectively, of the row of the focus nodes. Children of parents and parents of children up to the second depth (typically one) are displayed between the unity-spaced rows. If two or more nodes to be displayed occupy the same display coordinates, the nodes' x coordinates are fine-tuned with some algorithm. For instance, the x coordinates of the overlapping node icons may be fine-tuned randomly or according to the annotation of the node, whereby the nodes are ordered alphabetically. Alternatively, an optimization algorithm may place the node icons such that the combined length of inter-node connections or the number of crossing connections is minimized.

Figures 18C and 18D showed an embodiment in which some nodes are displayed twice in order to preserve the correspondence between generations and grid levels. In other words. Such node-splitting is also beneficial in connection with loops. Figure 16A showed a pathway 1600 that models a feedback process (a gene's self-inhibition mechanism). As is well known, feedback processes comprise loops. In small networks, loops are easily comprehended by humans, but in large networks it is beneficial to implement a display and navigation logic in which the cause of a cause-effect relation always precedes the effect. This means that the loop must be cut at some node, and the node at which the cut was made, is displayed as two nodes, one above and one below the focus node. If the number of hops in the loop exceeds the number of levels in the display grid 1854, all of the loop's nodes are not displayed simultaneously. But even in such a case, any node of the loop can be reached from any other node by continuously navigating in the direction of propagation or against it.

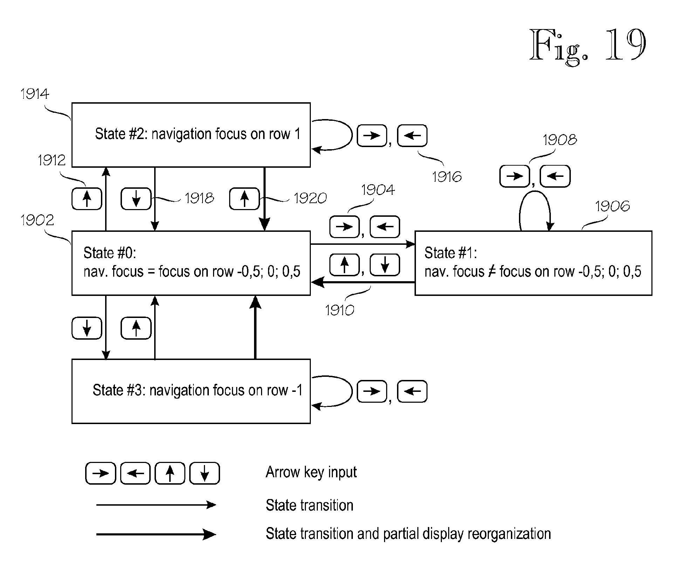

Figure 19 shows a preferred state diagram for navigation by arrow keys. The state diagram begins at state #0, denoted by reference numeral 1902, in which the navigation focus (item 1850 in Figures 18A to 18D) is located on top of a focus node. An input of a left or right key, denoted by reference numeral 1904, causes a transition to state #1, 1906, in which the navigation focus 1850 no longer coincides with a focus node. Further presses of the left or right keys, 1908, do not cause a transition away from state #1. Up or down keys, denoted by 1910, cause the following results: a partial display reorganization is performed, the system returns to state #0, and the node under the navigation focus becomes a new focus node.

From the base state #0, 1902, an up key 1912 causes a transition to state #2, 1914, in which the navigation focus is located one row higher than the focus node from which it started. Left and right keys, 1916, do not cause a transition away from state #2. A down key 1916 returns the system to state #0. But an up key 1920, beginning from state #1, has the same effect as input 1910, namely a partial display reorganization, a return to state #0 and the selection of the node under the navigation focus as a new focus node. Thus the user can navigate in a meaningful manner with only four arrow keys, and a separate selection key (analogous to a mouse click) is not necessarily needed. Instead, the system processes up and down keys as pairs, the first key press changing only the navigation key and the second key press selecting the node under the under the navigation focus as a new focus node. The downward movement via state #3 is a mirror image of the upward movement via state #3, and a detailed description is omitted.

In the interest of clarity, Figure 19 omits some processing in state #1, 1906. If the user presses a certain number of a horizontal key, followed by the same number of the opposite key, the system returns to state #0 without any display reorganization or change of focus.

It is also beneficial to implement a navigation history that preferably has its own user-activated window. The user may at any time clear the navigation history. Any focus nodes selected by the user after the clearing will be part of the navigation history. The navigation history can be associated with an identifier and saved in the database. The user may also be able to edit the navigation history, for example, by deleting spurious errands. The navigation path may serve as a basis for further navigation such that each press of a forward key (up or right) changes the focus node to the next node in the navigation history, and each press of a backward key (down or left) changes the focus node to the previous node. This embodiment enables the user to quickly, simply and reliably re-navigate an earlier navigation path. For instance, the user may evaluate if certain nodes are good candidates for a new pathway, by moving the focus via each candidate. A thoroughly poor set of candidates may be cleared by clearing the entire navigation history, or poor candidates may be deleted individually, but when the cleaned history is completed, the user may retrace the pathway simply by clicking of the forward or backward keys.

It should be understood that the above embodiments are meant to describe rather than restrict the invention, and many variations are possible without deviating from the scope of the appended claims.

**Acronyms**

IMS: Information Management System
VDL: Variable Description Language
SQL: Structured Query Language
XML: Extendible Markup Language

**References**

1. Batagelj, Vladimir; Mrvar, Andrej: *"Density-based approaches to network analysis, Analysis of Refers terror news network",* University of Ljubljana, www-2.cs.cmu.edu/~dunja/LinkKDD2003/papers/Batagelj.pdf

**Claims**

1. A system for visualizing an information network, the information network having a topology that comprises several nodes and several connections, the system comprising:

   a database (DB) for containing node descriptions (31) and connection descriptions (32), wherein each node description (31) comprises a node identifier (311) and node parameter information (313) of a node, and each connection description (32) comprises two node identifiers (323, 324) for identifying two nodes and connection parameter information (325), wherein the two node identifiers (323, 324) of the connection descriptions together with the node identifiers (311) of the node description define the topology of the information network;
   a rule set (RS) relating at least to the topology of the information network;
   first user input means (IN) for receiving a navigation input (NI) and for defining a set of focus nodes (N0, N90, 1820, 1830, 1840);
   second user input means for receiving filter settings (FS);
   selection means (RE, FR) for dynamically creating one or more subnetworks based on the set of focus nodes, the topology of the information network, the rule set (RS) and the filter settings (FS); and
   layout generation means (LG, BF, ZP) for dynamically generating a layout for the one or more subnetworks.

2. A system according to claim 1, wherein the rule set comprises at least one first user-settable depth (531, 532) and the selection means are operable to include into the one or more subnetworks nodes to said user-settable depth starting from each focus node.

3. A system according to claim 1 or 2, wherein the connection descriptions (32) are directional, the rule set comprises a second depth (532) and the selection means are operable to include into the one or more subnetworks:

   downstream nodes, to the second depth, of nodes upstream from each focus node; and/or
   upstream nodes, to the second depth, of nodes downstream from each focus node.

4. A system according to any one of the preceding claims, wherein the selection means are operable to dynamically maintain the set of focus nodes based on the navigation input.

5. A system according to any one of the preceding claims, further comprising a cache memory (CA) and a pre-fetch logic for retrieving nodes and/or connections from the database to the cache based on an extrapolated navigation input.

6. A system according to any one of the preceding claims, further comprising a logic for displaying an explicit indicator (15) for each displayed node that has one or more non-displayed neighbour nodes, wherein the size of the explicit indicator is independent of the location of the displayed node.

7. A system according to any one of the preceding claims, wherein the rule set (RS) comprises a rule (534) to suppress nodes that have at least a predetermined number of connections.

8. A system according to any one of the preceding claims, wherein the rule set (RS) comprises a rule (535) to suppress connections via nodes that have at least a predetermined number of connections.

9. A system according to any one of the preceding claims, wherein the selection means (RE, FR) comprise a logic for determining the navigation input (NI) based on a database query in respect of said node parameter information (313).

10. A system according to any one of the preceding claims, wherein the selection means are operable to dynamically create one or more subnetworks (502, 506), each of which comprises nodes within a predetermined depth from a focus node (504, 508) of the respective group, but the focus nodes (504, 508) are more distant from each other than said predetermined depth.

11. A system according to any one of the preceding claims, further comprising a logic routine for searching for a network motif based on a topological description of the network motif.

12. A system according to any one of the preceding claims, further comprising a logic routine for displaying differences between two information networks or fragments thereof.

13. A system according to any one of the preceding claims, further comprising a logic routine for displaying in the vicinity of a node (1510) an indicator (1520, 1530, 1540) of a numerical parameter of the node.

14. A system according to any one of the preceding claims, further comprising a logic routine for determining a homology measure between two information networks or fragments thereof.

15. A system according to any one of the preceding claims, wherein the information network comprises cause-effect relations and the system comprises a logic routine for displaying cause-effect relations (1814, 1820) such that:

the system provides a principal direction of propagation (1856) for said cause-effect relations; and
in each cause-effect relation, the cause (1814) precedes the effect (1820) in said principal direction of propagation.

16. A system according to any one of the preceding claims, wherein the logic routine for displaying cause-effect relations comprises a logic routine for displaying multiple generations of cause-effect relations with equidistant levels (1854) in said principal direction of propagation (1856).

17. A system according to claim 16, wherein the logic routine for displaying cause-effect relations comprises a logic routine for displaying multiple icons (1820A, 1820B; 1836A, 1836B) at different locations for a node (1820, 1836) that is part of multiple cause-effect relations.

18. A system according to any one of the preceding claims, wherein the node descriptions (31) and connection descriptions (32) in the database (DB) describe biochemical information in an extendible variable description language (90 - 98).

19. A system according to claim 18, wherein the extendible variable description language comprises separate descriptors for organism and location (1105, 1106).

20. A computer program product, comprising computer program code, wherein execution of the computer program code in a computer system results in creation of a system according to claim 1.

Fig. 1A

Fig. 1B

Fig. 1C

16

17

16'

17'

Fig. 2

RS   Rule set   FS   Filter settings

DB

RE   Retrieval engine

CA   Cache

FR

Filter

LG   Layout gener.

BF   Display buffer

ZP   Zoom & pan

TE

DI

PF   Pre-fetch

NI

IN

Fig. 3

| | |
|---|---|
| 311 | Node ID |
| 312 | Plaintext name |
| 313 | Physical parameters |
| 314 | # of connections |
| 315 | Relevance |

31

| | |
|---|---|
| 321 | Connection ID |
| 322 | Plaintext name |
| 323 | Node 1 ("from") |
| 324 | Node 2 ("to") |
| 325 | Physical parameters |
| 326 | Relevance |

32

Fig. 4

NI    FS    DB    CA    RE    FR    LG/BF

4-2.  "Node X"

Connections to/from X

4-4.

4-8.
Repeat
~ 3 - 5
times

Retrieve nodes

4-6.

Nodes and connections

4-10.

Nodes and
connections

4-14.  "Up two nodes"

4-12.

Nodes and connections

4-16.

Nodes and
connections

4-18.

Pre-fetch

4-20.

New
filter settings

4-22.

Nodes and connections

4-24.

Nodes and
connections

4-26.

Fig. 5

UI

AA_247

15

AA_229  AB_112

AA_123  AB_347  AX_335  524

AX_335  504  AZ_747  522

502  506

510

508

BA_844

520

| | Node ID |
|---|---|
| ✓ | Plaintext name |
| ✓ | Concentration |
| | Reaction rate |
| | ... |

530

| | |
|---|---|
| 531 | Show 3 ▽ connections upstream |
| 532 | Show 1 ▽ connections downstream |
| 533 | Suppress nodes with ≤ 2 ▽ connections |
| 534 ✓ | Suppress nodes with ≥ 50 ▽ connections |
| 535 ✓ | Suppress connections via nodes with ≥ 50 ▽ connections |

**Fig. 6**

600

604 Base variables/units

626 Name tables

602 Data set

Contents: variable, biomaterial, time

Organization:
- variable value matrix
- row and column description lists
- fixed dimension description

606 Time

610-1 Population

610-2 Individual

610-3 Reagent

610-4 Sample

610 Biomaterial

612 Pathway

608 Experiment

614 Location

620 Database reference

618 Biochemical entity

616 Connection

622 Interaction

624 Kinetic law

618-1 Gene

618-2 Transcript

618-3 Protein

618-4 Macromolecular complex

618-5 Compound

618-6 Abiotic stimulus

614 614-1 Organism

614-2 Organ

614-3 Tissue

614-4 Cell type

614-5 Cellular compartment

614-6 Spatial point

1 *    1-to-many relation
* *    many-to-many relation
→      subclass of

Fig. 7A

Fig. 7B

Fig. 7C

*800*

*810*

PSA1

*882*

$\mathbb{F}$ig. 8

V[reaction rate]U[mol/l/s]I[EC 2.7.7.14_PSA1]=0.01

*883*

GTP

*820*

*860*

Pyrophosphate

V[flux]U[mol/l/s]...
C[GDP-D-mannose]...
I[EC 2.7.7.14_PSA1]=0.01

EC 2.7.7.14_PSA1

*881*

D-mannose 1-phosphate

GDP-D-mannose

V[concentration]U[mol/l]...
C[GDP-D-mannose]=1.0

GDP

EC 2.7.7.22_GMPPB

Orthophosphate

*850*

GMPPB

*840*

| | | |
|---|---|---|
| *810* → ◯ | Biochemical entity | |
| *820* → ▭ | Interaction | |
| *830* → | Connections | |
| *840* → ◯ → | Substrate connection, interaction consumes biochemical entity | |
| *850* → → ◯ | Product connection, interaction produces biochemical entity | |
| *860* → - - - -▶ | Activation | |
| *870* → - - - -⊣ | Inhibition | |

## Fig. 9A

90 →

| 92 | | 93 | | 94 | | 95 | | 96 | | |
|---|---|---|---|---|---|---|---|---|---|---|
| Keyword | & | Opening delimiter | & | Name | & | Closing delimiter | & | Separator | & | 91 |

31

## Fig. 9B

| 98 | 98' | 98" |
|---|---|---|
| T | Time (relative) | T[-2.57E-3] |
| Ts | Time stamp | Ts[2002-11-26 14:00:00] |
| Sa | Sample | Sa[123456] |
| Po | Population | Po[2233445] |
| Id | Individual | Id[patient xyz] |
| Re | Reagent | Re[reagent a] |
| L | Location | L[yeast K2 mitocondria] |
| X/Y/Z | Spatial Z/Y/Z coordinate | X[0] relative to reference model |
| O | Organism | O[human] |
| V | Variable | V[concentration] |
| U | Unit | U[mol/l] |
| G | Gene | G[P53] |
| Tr | Transcript | Tr[mRNA from gene P53 to protein P53] |
| P | Protein | P[P53] |
| C | Compound | C[mannose] |
| M | Macromolecular complex | M[ribosome] |
| A | Abiotic stimulus | A[light] |
| I | Interaction | I[EC 1.2.3.4_P12345_F] |

# Fig. 10

1000

1002

Valid
keyword

Any (not closing
delimiter or end)

Opening
delimiter

Closing
delimiter

End

1010

Initial
state

1

1004

2

1006

3

1008

OK

Separator

1012

Else

End

Else

Error

# Fig. 11

1101 — V[concentration] of C[mannose]in U[mol/l]

1102 — V[concentration] C[mannose]U[mol/l]

1103 — V[concentration]of O[rat]P[P53] in U[mol/l]

1104 — V[concentration] O[rat]P[P53] U[mol/l]

1105 — V[concentration]of O[human]P[P53] in L[rat nucleus] in U[mol/l]

1106 — V[concentration]O[human]P[P53] L[rat nucleus] U[mol/l]

1107 — V[flux] of C[mannose]from I[EC 2.7.7.14 PSA1] in U[mol/l]

1108 — V[flux]C[mannose]I[EC 2.7.7.14-PSA1]U[mol/l/s]

1109 — V[reaction rate] through I[EC 2.7.7.14-PSA1] in U[mol/l/s]

1110 — V[reaction rate]I[EC 2.7.7.14-PSA1]U[mol/l/s]

1111 — I[EC 2.7.7.14-PSA1]

1112 — V[flux] L[yeast golgi] C[mannose]I[mannose transport]U[mol/l/s]

1114 — V[Expression level]Tr[mRNA from gene P53 to protein P53]U[-]

1114 — V[*]P[*]0[*]L[*]U[*]

1115 — Ts[2003.1.2 10:00:00, 2003.1.2 14:00:00]

1117 — Ts[2003.1.2 12:00:00]T[-5,0, 5.0]

1118 — L[human-eyelid_epith_nuc]

Fig. 12

Subclass of

1310

# Fig. 13A

1311

| Ts[*] |
| --- |

| V[expression level]Tr[mRNA1...]U[-] |
| --- |
| V[expression level]Tr[mRNA2...]U[-] |
| V[expression level]Tr[mRNA3...]U[-] |
| V[expression level]Tr[mRNA4...]U[-] |
| V[expression level]Tr[mRNA5...]U[-] |
| V[expression level]Tr[mRNA6...]U[-] |
| ... |
| V[age]U[years] |

1313

1312

| Id[patient A] | Id[patient B] | Id[patient C] | Id[patient D] |
| --- | --- | --- | --- |
| 25.18 | 40.83 | 39.46 | 28.15 |
| 9.76 | 15.45 | 14.91 | 11.84 |
| 250.66 | 99.43 | 546.23 | 429.00 |
| 99.02 | 75.39 | 88.25 | 94.67 |
| 3.07 | 9.45 | 10.23 | 6.78 |
| 101.12 | 210.85 | 124.92 | 145.63 |
| ... | | | |
| 67 | 81 | 75 | 62 |

1314

| Expression level of mRNA1 - mRNA6 of patients A - D at (time) | | | |
| --- | --- | --- | --- |
| | A | B | C | D |
| mRNA1 | 25.18 | 40.83 | 39.46 | 28.15 |
| mRNA2 | 9.76 | 15.45 | 14.91 | 11.84 |
| mRNA3 | 250.66 | 99.43 | 546.23 | 429.00 |
| mRNA4 | 99.02 | 75.39 | 88.25 | 94.67 |
| mRNA5 | 3.07 | 9.45 | 10.23 | 6.78 |
| mRNA6 | 101.12 | 210.85 | 124.92 | 145.63 |
| | ... | | | |
| age | 67 | 81 | 75 | 62 |

1315

1320

# Fig. 13B

1321

| Po[Saccharomyces cerevisiae] Sa[xyz]Ts[2003.01.15 12:10:00] |
| --- |

| V[expression level]Tr[mRNA1...]U[-] |
| --- |
| V[expression level]Tr[mRNA2...]U[-] |
| V[expression level]Tr[mRNA3...]U[-] |
| V[expression level]Tr[mRNA4...]U[-] |
| V[expression level]Tr[mRNA5...]U[-] |
| V[expression level]Tr[mRNA6...]U[-] |
| ... |
| V[temperature]U[centigrade] |

1323

1322

| T[0] | T[30] | T[60] | T[120] |
| --- | --- | --- | --- |
| 2.8 | 4.3 | 9.6 | 12.5 |
| 90.6 | 53.5 | 14.91 | 15.8 |
| 2500.6 | 1000.3 | 546.3 | 100.0 |
| 99.2 | 75.5 | 68.5 | 194.2 |
| 300.0 | 259.4 | 102.3 | 117.7 |
| 191.2 | 214.8 | 412.9 | 450.3 |
| ... | | | |
| 25.0 | 30.1 | 35.0 | 39.8 |

1324

Fig. 13C

1330

| Keyword | Value | Row | Column | (ObjectClass)/(ObjectID) |
|---|---|---|---|---|
| Po | Saccharomyces cerevisiae | -1 | -1 | |
| Sa | xyz | -1 | -1 | |
| Ts | 2003.01.15 12:10:00 | -1 | -1 | |
| V | expression level | 1-6 | -1 | |
| Tr | mRNA1 | 1 | -1 | |
| Tr | mRNA2 | 2 | -1 | |
| Tr | mRNA3 | 3 | -1 | |
| Tr | mRNA4 | 4 | -1 | |
| Tr | mRNA5 | 5 | -1 | |
| Tr | mRNA6 | 6 | -1 | |
| U | - | 1-6 | -1 | |
| V | temperature | 8 | -1 | |
| U | centigrade | 8 | -1 | |
| T | 0 | -1 | 1 | |
| T | 30 | -1 | 2 | |
| T | 60 | -1 | 3 | |
| T | 120 | -1 | 4 | |

1331 — {Po, Sa, Ts}
1333 — {V ... U}
1332 — {T ...}

1334    1334A  1334B  1334C

| 1 | 1 | 2.8 |
|---|---|---|
| 1 | 2 | 4.3 |
| 1 | 3 | 9.6 |
| 1 | 4 | 12.5 |
| 2 | 1 | 90.6 |
| ... | | |
| 8 | 3 | 35.0 |
| 8 | 4 | 39.8 |

Fig. 14

| Ts[*] | Id[patient A] | Id[patient B] | Id[patient C] | Id[patient D] |
|---|---|---|---|---|
| V[expression level]Tr[mRNA1...]U[-] | 25.18 | 40.83 | 39.46 | 28.15 |
| V[expression level]Tr[mRNA2...]U[-] | 9.76 | 15.45 | 14.91 | 11.84 |
| V[expression level]Tr[mRNA3...]U[-] | 250.66 | 99.43 | 546.23 | 429.00 |
| V[expression level]Tr[mRNA4...]U[-] | 99.02 | 75.39 | 88.25 | 94.67 |
| V[expression level]Tr[mRNA5...]U[-] | 3.07 | 9.45 | 10.23 | 6.78 |
| V[expression level]Tr[mRNA6...]U[-] | 101.12 | 210.85 | 124.92 | 145.63 |
| ... | ... | | | |
| V[age]U[years] | 67 | 81 | 75 | 62 |

Fig. 15

Node icon — 500 / 300 / 100

Node icon — 400 / 200 / 0

Node icon — 400 / 200 / 0

Fig. 16A

Fig. 16B

Fig. 16C

1670

Retrieve next matching pathway — 1672

Pathways exhausted? — 1674 — Yes → END

No

Take first element of criterion — 1676

Find matching element in current pathway — 1678

Match found? — 1680 — No →

Yes

Construct tree structures from current pathway with current element as root node — 1682

Tree matches criterion? — 1684 — Yes → Mark pathway as good — 1686

No

Trees exhausted? — 1688

No

Yes

**Fig. 16D**

1660

G[*] ○

Tr[*]

I[*]

I[*]

P[*]

**Fig. 16E**

1690

SELECT DISTINCT C1.id as C1_id, C2.id AS C2_id, C3.id AS C3_id, C4.id AS C4_id, C5.id AS C5_id
FROM  connection C1, connection C2, connection C3, connection C4, connection C5
WHERE
C1.pathway_id = 2 AND
C2.pathway_id = 2 AND
C3.pathway_id = 2 AND
C4.pathway_id = 2 AND
C5.pathway_id = 2 AND
C1.type = 3 AND
C2.type = 2 AND
C3.type = 3 AND
C4.type = 2 AND
C5.type = 5 AND
C1.object_class = 'gene' AND
C2.object_class = 'transcript' AND
C3.object_class = 'transcript' AND
C4.object_class = 'protein' AND
C5.object_class = 'protein' AND
C2.object_id = C3.object_id AND
C4.object_id = C5.object_id AND
C1.interaction_id = C2.interaction_id AND
C3.interaction_id = C4.interaction_id AND
C5.interaction_id = C1.interaction_id AND
C5.interaction_id = C2.interaction_id

Fig. 17

Fig. 18A

| | Nodes (in general) |
|---|---|
| | Border nodes (nodes with non-displayed neighbours) |
| | Focus elements |
| | Navigation focus |
| | Navigation cursor |

Cause-effect relation

Grid

Principal direction
of propagation
(top to bottom)

Fig. 18B

Fig. 18C

Fig. 18D

Fig. 19

State #2: navigation focus on row 1 (1914, 1916)

→ , ← (1916)

→ , ← (1908)

State #0:
nav. focus = focus on row -0,5; 0; 0,5 (1902)

→ , ← (1904)

→ , ← (1918, 1920, 1912)

State #1:
nav. focus ≠ focus on row -0,5; 0; 0,5 (1906)

↑ , ↓ (1910)

State #3: navigation focus on row -1

→ , ← (1910)

→ ← ↑ ↓  Arrow key input

⟶  State transition

⟹  State transition and partial display reorganization